# NEUE EUROPÄISCHE PATENTSCHRIFT

(11) **EP 0 876 554 B2**
(45) Veröffentlichungstag und Bekanntmachung des Hinweises auf die Entscheidung über den Einspruch: **24.01.2007**
(45) Hinweis auf die Patenterteilung: 02.11.2000
(21) Anmeldenummer: 96937172.3
(22) Anmeldetag: 31.08.1996
(51) Int. Cl.: F02N 11/04

(54) **STARTER/GENERATOR FÜR EINEN VERBRENNUNGSMOTOR, INSBESONDERE EINES KRAFTFAHRZEUGS**
STARTER/GENERATOR FOR AN INTERNAL COMBUSTION ENGINE, IN PARTICULAR A VEHICLE ENGINE
DEMARREUR/GENERATEUR POUR MOTEUR A COMBUSTION INTERNE, NOTAMMENT D'AUTOMOBILE

(30) Priorität: 31.08.1995 DE 19532135; 31.08.1995 DE 19532163
(43) Veröffentlichungstag der Anmeldung: 11.11.1998
(73) Patentinhaber: TEMIC Automotive Electric Motors GmbH, 10553 Berlin (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: Pröll, Jürgen
(86) Internationale Anmeldenummer: PCT/DE1996/001622
(87) Internationale Veröffentlichungsnummer: WO 1997/008456

(56) Entgegenhaltungen:
- EP-A- 0 569 347
- EP-A2- 0 569 347
- EP-B1- 0 352 304
- WO-A-91/16538
- WO-A1-91/16538
- DE-A- 2 434 253
- DE-A1- 19 601 241
- FR-A- 2 563 280
- JP-A- 5 211 258
- JP-A- 8 193 564
- JP-A- 62 166 749
- US-A- 3 774 303
- US-A- 3 902 073
- US-A- 3 974 396
- US-A- 4 797 602
- US-A- 4 803 376
- US-A- 4 883 973
- US-A- 4 958 095
- US-A- 5 125 236
- US-A- 5 325 042
- PATENT ABSTRACTS OF JAPAN vol. 012, no. 007 (E-571), 9.Januar 1988 & JP 62 166749 A (FANUC LTD), 23.Juli 1987,
- PATENT ABSTRACTS OF JAPAN vol. 017, no. 649 (E-1468), 2.Dezember 1993 & JP 05 211258 A (HITACHI LTD;OTHERS: 01), 20.August 1993,
- Buch "Drehstrom-Linearantriebe für Fahrzeuge" von Klaus Hofer, VDE-Verlag 1993, Abschnitt 5.2 (Seiten 98-106)
- Küng L. et al: 'Hybrid III. "Concepts for the Electric System of a Hybrid Passenger Car', 11 International Electric Vehicle Symposium, Symposium Proceedings, Vol.1, Nr. 7.4, 1992
- Henneberger G.: 'Elektrische Motorausrüstung', Robert Bosch GmbH, 5.98 bis 103, 1998
- Josefowitz W. et al: 'Volkswagen Golf Hybrid-Vehicle Design and Test Results', 11 International Electric Vehicle Symposium, Symposium Proceedings, Vol.1, Nr.7.14, 1992
- Burke A.F.: 'Hybrid/Dectric Vehicle Design Options and Evaluations', SAE-Paper 920447, 1992, in SAE Spec, Publ.SP-915 "Electric and Hybrid Vehicle Technology", S.53-77,

## Beschreibung

Die Erfindung betrifft einen Starter/Generator für einen Verbrennungsmotor eines Kraftfahrzeugs.

Kraftfahrzeuge und andere mit Verbrennungsmotor ausgerüstete Fahrzeuge benötigen i.a. einen elektrischen Starter zum Starten des Verbrennungsmotors sowie einen Generator zur Versorgung elektrischer Verbraucher sowie zum Laden einer Batterie, welche u.a. die zum Starten benötigte elektrische Energie liefert. Seit der Frühzeit des Automobilbaus sind Starter und Generator in der Regel zwei gesonderte elektrische Maschinen, die an ihre jeweilige Funktion besonders angepaßt sind. Ein Starter muß relativ hohe Drehmomente bei relativ niedriger Verbrennungsmotor-Drehzahl aufbringen und ist daher herkömmlicherweise hoch gegenüber dem Verbrennungsmotor übersetzt. Er läuft nicht dauernd mit, sondern wird nur für den Startvorgang mit dem Verbrennungsmotor gekoppelt. Ein Generator läuft hingegen permanent mit dem Verbrennungsmotor und erreicht bei relativ hoher Übersetzung hohe Drehzahlen.

Die Vereinigung dieser beiden Funktionen in ein und derselben elektrischen Maschine ist ein anstrebenswertes Ziel, da hierdurch eine der beiden herkömmlicherweise benötigten Maschinen eingespart werden kann.

Eine Möglichkeit, trotz der unterschiedlichen Anforderungen an Starter und Generator beide Maschinen zu vereinen, ist aus G. Henneberger: "Elektrische Motorausrüstung", Vieweg, Braunschweig 1990, S. 98 - 103 bekannt. Gemäß diesem Vorschlag startet die elektrische Maschine - bei der es sich um eine wechselrichtergesteuerte Drehfeldmaschine handelt - den Verbrennungsmotor nicht selbst, sondern beschleunigt ein (zunächst vom Verbrennungsmotor entkoppeltes) Schwungrad. Bei Erreichen einer ausreichend hohen Drehzahl wird das Schwungrad mit Hilfe einer Reibkupplung mit der Kurbelwelle des Verbrennungsmotors gekoppelt. Die im Schwungrad gespeicherte Rotationsenergie wirft dann den Verbrennungsmotor an. Im Generatorbetrieb ist die elektrische Maschine permanent durch die Reibkupplung mit dem Verbrennungsmotor gekoppelt. Diese Lösung hat den Vorteil, daß die Leistungen und Drehmomente der elektrischen Maschine beim Starten und im Generatorbetrieb ähnlich sind. Nachteilig sind aber die große mechanische Belastung der Reibkupplung beim Einkuppeln des schnell laufenden Schwungrads, die u.a. zu Kupplungsverschleiß führt, sowie eine Totzeit vor jedem Startvorgang, welche jeweils zum Beschleunigen des Schwungrads benötigt wird.

Aus der PCT/SE91/00272 ist eine elektrische Asynchronmaschine bekannt, die alternativ als Generator oder als Starter arbeiten kann. Sie ist über ein Steuergerät mit einer Batterie gekoppelt. Ein weiterer Starter/Generator ist beispielsweise aus der EP-A-0 569 347 bekannt.

Die Erfindung stellt einen Starter/Generator für einen Verbrennungsmotor eines Kraftfahrzeugs gemäß Anspruch 1 bereit.

Eine "elektrische Maschine" ist jede Art von Maschine für Rotationsbewegungen, die sowohl als elektrischer Motor wie auch als elektrischer Generator betrieben werden kann. Unter "Drehfeldmaschine" wird - im Gegensatz zu einer Stromwendermaschine - eine insbesondere kommutatorlose Maschine verstanden, in der ein magnetisches Drehfeld auftritt, das vorzugsweise 360° überstreicht.

Der Wechselrichter kann die für die magnetischen Felder benötigten Spannungen und/oder Ströme mit (innerhalb gewisser Grenzen) frei wählbarer Frequenz, Amplitude und/oder Phase erzeugen.

"Zusammenlauf aus dem Stand" bedeutet, daß die elektrische Maschine und das Antriebsaggregat - anders als bei dem o.g. Schwungrad-Starter - gemeinsam aus dem Stand hochlaufen.

Aufgrund des Zusammenlaufs aus dem Stand
- erfolgt das Starten schnell und ohne Totzeit,
- ist der Starter/Generator praktisch verschleißfrei,
- erreicht der Starter/Generator einen relativ hohen Wirkungsgrad (da keine Energie für Kupplungserwärmung und -verschleiß verbraucht wird),
- kann die Kupplung zwischen Verbrennungsmotor und elektrischer Maschine entfallen.

Die elektrische Maschine läuft - anders als ein herkömmlicher Starter - permanent mit dem Verbrennungsmotor. Eine dort benötigte Einspur- und Freilaufvorrichtung kann daher hier entfallen.

Die elektrische Drehfeldmaschine ist vorzugsweise eine Asynchronmaschine, eine Synchronmaschine oder eine Reluktanzmaschine, insbesondere für Drehstrom, z.B. Drei-Phasen-Strom. Eine Asynchronmaschine hat i.a. einen relativ einfach aufgebauten Läufer (i. a. einen Läufer mit Kurzschlußwicklungen oder Wicklungen, deren Enden an Schleifringe geführt sind), in dem durch die magnetischen Drehfelder des Ständers, die der Bewegung des Läufers vor- oder nacheilen, Ströme induziert werden. Sie weist daher hinsichtlich der Erstellungskosten und der mechanischen Belastbarkeit Vorteile auf, ist jedoch steuerungstechnisch aufwendiger, da Betrag und Phasenwinkel des Läuferstromes lastabhängig, aber nicht direkt über Ständergrößen meßbar, sondern nur errechenbar sind. Hingegen haben Synchronmaschinen Läufer mit vorgegebenen ausgeprägten Polen, die durch Permanent- oder Elektromagnete erzeugt werden. Die Elektromagnete können z.B. über Schleifringe mit Strom gespeist werden. Synchronmaschinen haben im allgemeinen höhere Erstellungkosten, sind aber steuerungstechnisch einfacher zu handhaben, da bei ihnen das Drehmoment im wesentlichen vom Läuferwinkel abhängt, der mit Hilfe eines Läuferlage-Gebers direkt meßbar ist. Sie erfordern daneben einen geringeren Aufwand in der Leistungselektronik, können kompakter ausgeführt sein, haben einen geringeren Rückkühlbedarf und erzielen einen besseren Wirkungsgrad. Reluktanzmaschinen gehören im weiteren Sinn zu den Synchronmaschinen.

Insbesondere bei der Asynchronmaschine erfolgt die Steuerung der elektrischen Maschine vorzugsweise auf der Grundlage einer feldorientierten Regelung (sog. Vektorregelung). Hierbei wird, ausgehend von direkt meßbaren momentanen Größen, wie angelegte Spannung, Ständerstrom und ggf. Drehzahl, anhand eines rechnerischen dynamischen Maschinenmodells der Ständerstrom in eine drehmomentbildende Komponente, die mit dem Läuferfluß das Drehmoment erzeugt, und eine senkrecht dazu verlaufende, den Maschinenfluß erzeugende Komponente rechnerisch zerlegt und so das Drehmoment ermittelt. Diese Steuerungstechnik erlaubt es - obwohl die Stromverhältnisse im Läufer nicht direkt meßbar sind - ein gewünschtes Drehmoment mit hoher Genauigkeit einzustellen.

Bei dem erfindungsgemäßen Starter/Generator handelt es sich um ein dem Verbrennungsmotor zugeordnetes Hilfssystem. Wegen seines Hilfs-Charakters sollte er relativ zum Verbrennungsmotor wenig Raum beanspruchen, also möglichst kompakt sein. Dabei muß der Starter/Generator zum Starten relativ hohe Drehmomente aufbringen können und soll für die Generatorfunktion einen möglichst hohen Wirkungsgrad aufweisen. Die im folgenden genannten vorteilhaften Maßnahmen dienen u.a. einem kompakten Aufbau bei großer Drehmomentabgabe und hohem Wirkungsgrad.

Eine Maßnahme zur Erzielung hoher Kompaktheit liegt darin, daß die drehfelderzeugende Wirkeinheit der elektrischen Maschine (das heißt i.a. der Ständer) wenigstens 8 magnetische Pole (bezogen auf 360°) hat. Besonders vorteilhaft sind feinere Polteilungen, entsprechend z.B. 10, 12, 14, 16 oder mehr Polen (bei kreisförmig geschlossener Maschine). Zu der Art und Weise, wie man Drehstromwicklungen mit einer bestimmten Anzahl von Polen realisiert, wird z.B. verwiesen auf G. und H. Häberle: "Elektrische Maschinen in Anlagen der Energietechnik", Verlag Europa-Lehrmittel, Haan-Gruiten, 3. Auflage, 1994, Seiten 169 - 172.

Eine hohe Polzahl erlaubt es unter anderem, die Wickelköpfe des Ständers klein auszubilden, und zwar sowohl in Axialwie auch in Umfangsrichtung der Maschine, so daß die Maschine in Axialrichtung insgesamt kürzer ausgebildet sein kann. Vorzugsweise beträgt der axiale Überstand der Wickelköpfe auf jeder Seite des Ständers nur 5 - 25 mm, insbesondere 10 - 20 mm. Die axiale Breite des Ständerrückens beträgt vorzugsweise 25 - 100 mm. Bei einem Überstand von 2 mal 15 mm und einer Rückenbreite von 40 mm ergibt sich beispielsweise eine axiale Gesamtbreite des Ständers von 70 mm, wobei das Verhältnis von Rückenbreite zu Gesamtbreite 0,57 beträgt. Vorzugsweise liegt dieses Verhältnis zwischen 0,4 und 0,8, besonders vorzugsweise zwischen 0,55 und 0,8. Neben dem Vorteil einer kompakteren Ausbildung der Maschine sind wegen der geringeren Wickeldrahtlänge - kleinere Wikkelköpfe benötigen weniger nicht-aktiven Wicklungsdraht - die ohmschen Verluste geringer. Ferner ist das Streufeld (das den Blindleistungsanteil wesentlich bestimmt) kleiner, da es von der Wickelkopffläche abhängt.

Eine feine Polteilung erlaubt unter anderem, den Ständerrücken für den magnetischen Rückfluß dünner (und damit auch leichter) auszubilden, mit der Folge, daß bei gleichem Außendurchmesser der Maschine der Läufer einen größeren Durchmesser haben kann. Größerer Läuferdurchmesser führt wegen des in Umfangsrichtung längeren Luftspaltes und des größeren wirksamen Hebelarms zu einem größeren Drehmoment. Die Dicke des Rückens in Radialrichtung, die sich zusammensetzt aus der Höhe von Zähnen und der Dicke des durchgehenden Rückenteils, beträgt vorteilhaft 10 - 50 mm, vorzugsweise 15 - 30 mm und ist besonders vorzugsweise kleiner oder gleich 25 mm. Der Außendurchmesser des Rückens beträgt vorzugsweise 230 - 450 mm und besonders vorzugsweise 250 mm - 350 mm. Das Verhältnis von zweifacher Rückendicke zum Rückenaußendurchmesser beträgt vorzugsweise 0,05 - 0,25 und besonders vorzugsweise 0,1 - 0,2. Beispielsweise hat eine Maschine mit einem Rückenaußendurchmesser von 300 mm eine Zahnhöhe von 15 mm und eine Dicke des durchlaufenden Rükkenteils von 10 mm, insgesamt also eine Rückendicke von 25 mm. Das obige Verhältnis beträgt dann 50 mm zu 300 mm, also 0,167.

Insgesamt führen somit eine feine Polteilung, kleine Wikkelköpfe und ein dünner Ständerrücken zu einer kompakteren und leichteren Maschine.

Bei schnell laufenden Drehfeld-Maschinen sind hohe Polzahlen unüblich, da sie eine relativ hohe Polwechselfrequenz bedingen. Ein üblicher Wert für die Polwechselfrequenz beträgt beispielsweise 120 Hz. Die im Rahmen der Erfindung verwendete elektrische Maschine hat hingegen vorteilhaft eine hohe maximale Polwechselfrequenz, vorzugsweise zwischen 300 und 1600 Hz und mehr, besonders vorzugsweise zwischen 400 Hz und 1500 Hz.

Um den Einfluß von Wirbelströmen im Ständer - die mit steigender Polwechselfrequenz zunehmen - zu verringern, weist der Ständer vorteilhaft dünne Ständerbleche, vorzugsweise mit einer Dicke von 0,35 mm oder weniger, besonders vorzugsweise 0,25 mm oder weniger auf. Als weitere Maßnahme zur Verringerung der Verluste sind die Ständerbleche vorzugsweise aus einem Material mit niedrigen Ummagnetisierungsverlusten, insbesondere kleiner als 1 Watt/kg bei 50 Hz und 1 Tesla, gefertigt.

Als weitere Maßnahme, die zu einer kompakten Ausbildung beiträgt, weist die elektrische Maschine vorteilhaft eine innere Fluidkühlung auf. Bei dem Fluid kann es sich grundsätzlich um Gas (z.B. Luft) und vorteilhaft um Flüssigkeit (z.B. Öl) handeln. Eine Kühltechnik besteht darin, die Maschine im Inneren (d.h. in dem den Läufer aufnehmenden Raum) ganz unter Kühlflüssigkeit zu setzen. Ein Nachteil hiervor ist jedoch, daß oberhalb ca. 500 min⁻¹ Turbulenzverluste auftreten, die oberhalb ca. 2000 min⁻¹ merkliche Ausmaße annehmen können. Um dem zu begegnen, erfolgt die Zufuhr der Kühlflüssigkeit vorteilhaft verlustleistungs- und/oder drehzahlabhängig, und zwar vorzugsweise mit einer Sprühflüssigkeitskühlung. In der Maschine befindet sich dann immer nur im wesentlichen soviel Kühlflüssigkeit, wie momentan zur Abfuhr der Verlustleistung benötigt wird. Bei sehr hohen Verlustleistungen und/oder niedrigen Drehzahlen kann die ganze Maschine unter Kühlflüssigkeit gesetzt werden. Die Sprühflüssigkeitskühlung stellt einen höchst wirksamen Wärmeübergang sowie eine besonders gute Verteilung der Flüssigkeit sicher.

Die elektrische Maschine hat vorzugsweise einen eigenen abgeschlossenen Kühlmittelkreislauf. Zur Abführung der Wärme nach außen (z.B. in die Atmosphäre) kann dieser einen autarken Rückkühler (z.B. einen Luftkühler) aufweisen. Möglich ist aber auch ein parasitärer Rückkühler, welcher die Abwärme in ein anderes Kühlsystem einbringt, bei dem es z.B. um den Verbrennungsmotor- oder Getrieböl-Kühlkreislauf eines Kraftfahrzeugs handeln kann. Die Abwärme wird dann durch den Rückkühler des anderen Kühlsystems nach außen abgegeben. Der parasitäre Rückkühler kann sehr einfach und kompakt aufgebaut sein, z.B. in Form eines Kühlers, der in die Kühlflüssigkeit des anderen Kühlsystems eingetaucht ist und aufgrund des guten Wärmeübergangs nur eine relativ geringe Oberfläche benötigt. Alternativ kann die elektrische Maschine aber auch keinen eigenen abgeschlossenen Kühlkreislauf haben, sondern kann in einen anderen Kühlkreislauf integriert sein, etwa in einen Getriebeöl-Kühlkreislauf.

Um besonders hohe Drehmomente zu erzielen, arbeitet die elektrische Maschine vorzugsweise stark im Bereich magnetischer Sättigung. Ein Maß für die magnetische Sättigung ist der Strombelag (bei maximalem Drehmoment) im Ständer pro cm Luftspaltlänge in Umfangsrichtung. Vorzugsweise beträgt dieses Maß wenigstens 400 - 1000 A/cm, besonders vorzugsweise wenigstens 500 A/cm. Ein anderes Maß für die magnetische Sättigung ist der sog. Abplattungsfaktor: Er gibt an, wie stark bei sinusförmigem Erregerstrom das Verhältnis von Spitzenwert zum arithmetischen Mittelwert des Betrags des Magnetfelds ist. Er beträgt bei rein sinusförmigem Verlauf 1,57, bei üblichen elektrischen Maschinen etwa 1,35, und bei dieser bevorzugten Ausgestaltung 1,05 - 1,15. Das Arbeiten stark im Sättigungsbereich hat den weiteren Vorteil, daß die Maschine einen relativ weiten Luftspalt zwischen den Wirkeinheiten (i.a. Läufer und Ständer) aufweisen kann. Die Weite des Luftspalts beträgt vorzugsweise 0, 25 - 2,5 mm, vorzugsweise 0, 5 - 1,5 mm, und besonders vorzugsweise 0,75 - 1,5 mm. Änderungen des Luftspaltes - wie sie bei Radialschwingungen der den Läufer tragenden Welle auftreten - wirken sich wegen des Betriebs im Sättigungsbereich kaum aus. Neben der Robustheit gegenüber Radialschwingungen erlaubt diese Maßnahme auch eine Herabsetzung der Genauigkeitsanforderungen und damit eine beträchtliche Vereinfachung der Fertigung der elektrischen Maschine.

Quantitativ läßt sich die Kompaktheit durch die Größe "Drehmomentdichte" ausdrücken. Vorzugsweise weist die elektrische Maschine eine hohe Drehmomentdichte - bezogen auf das maximale Drehmoment - auf, die besonders vorzugsweise größer als 0,01 Nm/cm³ ist.

Eine derart kompakt aufgebaute elektrische Maschine hat im allgemeinen eine relativ geringe Induktivität. Um hier dennoch beispielsweise mit Hilfe einer getakteten Spannung einen möglichst glatten sinusförmigen Strom zum Erzeugen der elektrischen Drehfelder zu erzielen, arbeitet der Wechselrichter mit einer Taktfrequenz größer 10 kHz, insbesondere 20 kHz bis 100 kHz und höher. Eine hohe Taktfrequenz hat auch den Vorteil, eine kompakte Bauweise des Wechselrichters selbst zu erlauben: Denn beispielsweise bei einem Spannungszwischenkreis-Wechselrichter ist die Kapazität im Zwischenkreis, welche den elektronischen Schaltern des Wechselrichters die Zwischenkreisspannung bereitstellt, umgekehrt proportional zur Frequenz, so daß bei höherer Taktfrequenz hierfür eine kleinere Kapazität ausreicht. Die kleineren Zwischenkreiskondensatoren können mit kurzen Leitungswegen unmittelbar neben den elektronischen Schaltern angeordnet werden. Ferner kann eine nötige EMV-Filterung (EMV: Elektromagnetische Verträglichkeit) des Wechselrichters nach außen kompakter ausgeführt sein, da die Größe der Filter umgekehrt proportional zur Taktfrequenz ist.

Unter einem "Zwischenkreis" versteht man einen Kreis, welcher im wesentlichen Gleichspannung bzw. -strom liefern kann, aus der ein nachgeschalteter Wechselrichter-Teil (der sog. Maschinen-Wechselrichter) durch Pulsen oder Takten variable Wechselspannungen bzw. -ströme bilden kann. Diese Gleichspannung bzw. dieser Gleichstrom muß daher mit großer Flankensteilheit bereitgestellt werden. Eine Fahrzeugbatterie ist hierzu meist zu träge, man verwendet daher z.B. eine Kapazität als Energiespeicher im Zwischenkreis. Im allgemeinen umfaßt ein Zwischenkreis-Wechselrichter drei Baugruppen, und zwar eine Eingangsbaugruppe zur Versorgung mit bzw. Abfuhr von elektrischer Energie, eine Ausgangsbaugruppe in Form des Maschinen-Wechselrichters und den dazwischenliegenden Zwischenkreis.

Als weitere vorteilhafte Maßnahme zur Erzielung einer kompakten Bauweise des Wechselrichters sind elektronische Schalter des Wechselrichters fluidgekühlt, vorzugsweise siedebadgekühlt. Als Siedebad-Kühlmittel kann beispielsweise ein Fluorkohlenwasserstoff verwendet werden. Bei der Siedebadkühlung verdampft das flüssige Kühlmittel an Wärmequellen und entzieht ihnen dadurch seine relativ hohe Verdampfungswärme. Der Dampf steigt auf und kann z.B. in einem externen Kühler kondensieren und dabei seine Verdampfungswärme abgeben. Diese Kühltechnik erlaubt kompakteste Anordnung der elektronischen Schalter des Wechselrichters ohne jegliche Kühlkörper. Daneben hat sie den Vorteil, daß zur Erreichung auch hoher Kühlleistung relativ geringe Temperaturdifferenzen ausreichen: Während bei einer Luftkühlung üblicherweise eine Temperaturdifferenz von 40° C zwischen Kühloberfläche und dem Gehäuse eines zu kühlenden Chips nötig ist, reicht hier bereits eine Differenz von 2-10° C, insbesondere ungefähr 5° C aus. Als Folge sind hohe Umgebungstemperaturen tolerabel, beispielsweise bei einer Chiptemperatur von 65° C eine Umgebungstemperatur bis 60° C. Die Abwesenheit von Kühlkörpern und die hohe erzielbare Kompaktheit ermöglicht ferner eine hohe Rüttelfestigkeit; daneben erlaubt das Siedebad die Schaffung einer sauerstofffreien Atmosphäre im Bereich der elektronischen Bauelemente des Wechselrichters, was sich insgesamt lebensdauerverlängernd auswirkt. Das den Kühlraum bildende Gehäuse kann - wenn es aus leitendem Material ausgeführt ist - auch als Abschirmung dienen. Elektrische Zwischenkreis-Speicherelemente zum Bereitstellen zu taktender Spannung bzw. zu taktenden Stroms (z.B. die o.g. Kapazität) können innerhalb des Kühlgehäuses angeordnet sein, wodurch sich kurze Leitungswege ergeben können. Ein ggf. gesonderter elektrischer Bremsenergie-Speicher kann innerhalb oder außerhalb des Kühlgehäuses angeordnet sein. Die im letzteren Fall möglicherweise relativ hohen Zuleitungsinduktivitäten stören nicht, da der Bremsenergie-Speicher auf einer relativ "langsamen" Zeitskala arbeitet.

Eine weitere kühltechnisch vorteilhafte Maßnahme besteht darin, mehrere elektronische Schalter des Wechselrichters, insbesondere 2 bis 20 und mehr, parallel zu schalten Die Parallelschaltung führt zu einer verteilten. Anordnung der Wärmequellen und damit einer relativ geringen Verlustleistungsdichte.

Der Wechselrichter umfaßt vorteilhaft als Schalter Halbleiterschalter, vorzugsweise schnelle Halbleiterschalter, wie Feldeffekttransistoren - besonders vorzugsweise Metalloxidhalbleiter (MOS)-Feldeffekttransistoren, bipolare Transistoren und/oder bipolare Transistoren mit isoliertem Gateanschluß (IGBTs). Unter "schnellen" Halbleiterschaltern werden insbesondere solche verstanden; welche die o.g. Taktfrequenzen erlauben. MOS-Feldeffekttransistoren haben bei hohen Taktfrequenzen die relativ geringsten Verluste. Sie weisen eine Ohmsche Charakteristik auf (während andere Halbleiterbauelemente im allgemeinen eine feste Verlustcharakteristik haben), so daß im Teillastbetrieb die Verluste relativ gering sind.

Der Wechselrichter ist ein Pulswechselrichter, d.h. er erzeugt die für die magnetischen Felder der elektrischen Maschine benötigten Spannungen und/oder Ströme vorzugsweise durch Pulse, insbesondere auf der Grundlage von Pulsweiten- oder Pulsamplitudenmodulation. Er kann dies vorteilhaft mit Hilfe elektronischer Schalter tun, welche die Pulse aus einer vorgegebenen Gleich- oder Wechselspannung oder einem vorgegebenen Gleich- oder Wechselstrom herausschneiden. Beispielsweise bei einem Zwischenkreis-Wechselrichter mit konstanter Zwischenkreisspannung lassen sich durch sinusbewertete Pulsweitenmodulation bei hohen Taktfrequenzen aufgrund der Maschineninduktivität nahezu sinusförmige Ströme beliebig einstellbarer Frequenz, Amplitude und/oder Phase erzeugen. Bei der Pulsamplitudenmodulation geht man beispielsweise aus von einem Wechselrichter mit variabler Zwischenkreisspannung und erzeugt so Pulse verschiedener Amplituden.

Um die für den Startvorgang benötigte, hohe elektrische Leistung ohne übermäßige Belastung der Fahrzeugbatterie bereitzustellen, ist ein Energiespeicher vorgesehen, der vor dem Startvorgang mit Energie aufgeladen wird und dem dann die benötigte Energie kurzfristig entnommen wird. Hierfür ist der Wechselrichter als Zwischenkreis-Wechselrichter ausgebildet, der im Zwischenkreis wenigstens einen Energiespeicher für die Startenergie aufweist. Bei dem Speicher kann es sich insbesondere um einen elektrischen, magnetischen und/oder elektrochemischen Speicher, wie eine Kapazität, eine Induktivität und/oder eine (schnelle) Batterie handeln. Der kann neben der Speicherung der Startenergie auch anderen Aufgaben dienen. Beispielsweise kann er die zum Pulsbetrieb des Wechselrichters nötige Energie speichern. (im letzteren Fall könnte er mit dem üblichen Zwischenkreis-Speicher zusammenfallen). Im übrigen kann die Ausbildung des Stromrichters als Zwischenkreis-Stromrichter in jedem Fall - z.B. auch ohne Speicher für die Startenergie und ggf. die Bremsenergie - vorteilhaft sein.

Bei herkömmlichen Kraftfahrzeugen, anderen Fahrzeugen und auch stationären Antriebsaggregaten gibt es häufig Hilfsmaschinen, welche da sie relativ hohe Leistung aufnehmen - mechanisch vom Antriebsaggregat (d.h. vom Verbrennungsmotor) angetrieben werden, z.B. über Riementriebe. Hierbei kann es sich z.B. um Klimamaschinen, Servoantriebe (z.B. für Brems- und Lenkunterstützung), Pumpen oder ähnliches handeln. Eine derartige mechanische Antriebskopplung ist i.a. nicht optimal, da die Hilfsmaschine dem Antriebsaggregat durch die von ihm vorgegebenen Drehzahl-Zustände folgen muß. Sie läuft damit einerseits nicht konstant bei ihrer optimalen Betriebsgröße (z.B. der Drehzahl bei einer rotatorischen Hilfsmaschine) und muß andererseits auch dann laufen, wenn dies mangels abgefragter Hilfsleistung gar nicht nötig wäre. Diese Nachteile können mit dem erfindungsgemäßen Starter/Generator, der als Hochleistungsmaschine ausgebildet sein kann, überwunden werden. Die elektrische Maschine liefert Strom auf relativ hohem Spannungsniveau, vorzugsweise im oberen Bereich der Niederspannung, wo gerade noch nicht für besonderen Berührungsschutz gesorgt werden muß (z.B. etwa 60 V Gleichspannung). Geht man darüber hinaus, wird vorzugsweise ein Bereich von 250 - 450 Volt gewählt. Man betreibt vorteilhaft die Hilfsmaschinen elektrisch aus dem Zwischenkreis auf diesen hohen Spannungsniveaus. Ein derart hohes Spannungsniveau liegt bei einem Zwischenkreis-Wechselrichter im Zwischenkreis bereits vor, und braucht so nicht besonders für diesen Zusatzzweck erzeugt zu werden. Ein elektrischer statt eines mechanischen Hilfsmaschinen-Antriebs ist deshalb möglich, da aus dem hohen Spannungsniveau relativ kleine Ströme resultieren (im Gegensatz etwa zu dem 12-Volt-Spannungsniveau eines herkömmlichen Kraftfahrzeugnetzes). Elektrisch angetrieben kann man die Hilfsmaschinen im Bedarfsfall bei ihrer optimalen Drehzahl laufen lassen und ansonsten abschalten. Man erreicht so eine deutliche Erhöhung des Gesamtwirkungsgrades. Vorteilhaft werden sämtliche Geräte und Hilfsantriebe eines Kraftfahrzeugs elektrisch betrieben. Der Verbrennungsmotor dient dann nur als Hauptantriebsmotor für das Fahrzeug sowie als Antriebsmotors des Generators. Für Niederleistungsverbraucher kann ein herkömmliches Niederspannungsbordnetz (z.B. 12 V oder 24 V) vorgesehen sein. Eine Batterie kann im Bereich des Niederspannungsbordnetzes angeordnet sein.

Vorteilhaft ist auch ein (weiterer) Wechselrichter zur Lieferung von 220 V Wechselstrom und/oder 380 V Drehstrom mit üblicher Netzfrequenz (z.B. 50 Hz) vorgesehen. Die Versorgung dieses weiteren Wechselrichters kann ebenfalls aus dem (Gleichspannungs-)Zwischenkreis erfolgen. Ein so ausgestaltetes Fahrzeug erlaubt die Versorgung normaler elektrischer Netzgeräte und stellt damit einen fahrbaren Netzstrom-Generator dar, der z.B. vorteilhaft bei Außenarbeiten einsetzbar ist.

Die Umwandlung elektrischer Energie aus dem Zwischenkreis in Wechselstrom kann vorteilhaft auch der Versorgung eines Wechselspannungs-Bordnetzes des Fahrzeugs dienen. Ein solches Netz hat den Vorteil, daß aus der Bordnetzspannung durch Transformatoren bei den einzelnen Verbrauchern beliebige, an den jeweiligen Verbraucher angepaßte Spannungen erzeugt werden können. Besonders vorteilhaft ist die Wechselspannung hochfrequent (d.h. die Frequenz ist größer als 1 kHz), da dann die Transformatoren besonders klein und leicht ausgebildet sein können.

Die Möglichkeit, den Starter/Generator als Hochleistungsmaschine auf hohem Spannungsniveau auszubilden, erlaubt dessen Einsatz für Heizzwecke im Fahrzeug. Es kann sich hierbei z.B. um eine elektrische Beheizung des Verbrennungsmotors, z.B. durch Beheizung des Kühlkreislaufs (insbesondere für den Winterbetrieb von direkt einspritzenden Turbo-Dieselmotoren), eines Fahrgastraums, eines Abgaskatalysators des Verbrennungsmotors, eines Kraftstoffilters, einer Scheibenwaschanlage, von Außenspiegeln und/oder von Fensterscheiben des Fahrzeugs handeln. Derartige Beheizungen sind bei herkömmlichen Kraftfahrzeugen entweder nicht, nur unzureichend oder nur durch Abwärme des Verbrennungsmotors möglich. Die elektrische Beheizung hat - abgesehen von Komforterhöhung etwa bei einer Unterstützung einer Fahrgastinnenraum-Heizung - vorteilhafte Auswirkungen für die Umweltfreundlichkeit von Kraftfahrzeugen: Elektrische Motor- und Katalysatorheizungen bringen den Verbrennungsmotor bzw. den Katalysator schnell auf Betriebstemperatur und erlauben zudem eine genaue und schnelle Regelung der Betriebstemperaturen. Dies sind wichtige Maßnahmen zum Erfüllen strenger Emissionsbestimmungen. Die Steuerung und Regelung der verschiedenen Heizungen, insbesondere der Motor- und Katalysatorheizung, kann von der Steuerung des Starter/Generators zur Ansteuerung des Wechselrichters mit übernommen werden.

Aufgrund seiner Geräusch- und Verschleißarmut sowie der fehlenden Totzeit ist der Starter/Generator für sehr häufiges Starten geeignet. Er wird daher vorteilhaft mit einer Start-Stop-Steuerung des Verbrennungsmotors kombiniert, bei welcher der Verbrennungsmotor nur im Bedarfsfall läuft und ansonsten abgestellt wird. Denn im Stadtverkehr laufen Verbrennungsmotoren von Kraftfahrzeugen aufgrund häufiger Halte an Ampeln und Kreuzungen einen beträchtlichen Teil ihrer Betriebszeit im Leerlauf. Dies stellt eine erhebliche Resourcenverschwendung und Umweltbelastung dar, da es einen an sich unnützen Mehrverbrauch an Kraftstoff mit einhergehender Emission giftiger, klimaaktiver oder sonstwie schädlicher Abgase mit sich bringt.

Die automatische Start-Stop-Steuerung veranlaßt vorzugsweise ein automatisches Stoppen des Verbrennungsmotors, wenn eine Stopbedingung (oder eine von mehreren) erfüllt ist. Zur Definition einer Stopbedingung können verschiedene Bedingungen allein oder in (Unter-)Kombination dienen, z.B.: Nullast, Schiebebetrieb, Leerlauf, Stillstand des Kraftfahrzeugs (d.h. Fahrgeschwindigkeit unterhalb eines bestimmten kleinen Wertes, z.B. 4 km/h), Verbrennungsmotor ist ausgekuppelt, kein Gang ist eingelegt, die Betriebs- oder feststellbremse ist betätigt, Betätigung eines Stopschalters.

Entsprechend veranlaßt die Start-Stop-Steuerung vorzugsweise bei Vorliegen einer Startbedingung (oder einer von mehreren) ein automatisches Starten des Verbrennungsmotors mit Hilfe der elektrischen Maschine. Auch zur Definition der Startbedingung können verschiedene Bedingungen allein oder in (Unter-)Kombination dienen, z.B: Betätigung des Fahrpedals, Lösen der Betriebs- bzw. Feststellbremse, Betätigen der Kupplung, Berühren oder Bewegen eines Gangschalthebels, Einlegen eines Ganges, Betätigen eines Startschalters.

Herkömmliche Starter bringen wegen ihrer hohen Übersetzung den Verbrennungsmotor nur auf eine relativ niedrige Start-Drehzahl (typischerweise 80-250 U/min), die weit unterhalb dessen Leerlauf-Drehzahl (typischerweise 600-800 U/min) liegt. Die Drehzahldifferenz zwischen Start-Drehzahl und der Leerlauf-Drehzahl muß der Verbrennungsmotor dann aus eigener Kraft überwinden. Er benötigt hierfür jedoch - da er sich bei diesen Drehzahlen weit unterhalb seiner Leerlauf-Drehzahl in einem sehr ungünstigen Betriebsbereich befindet - ein relativ großes Quantum Kraftstoff, welches zudem nur unvollständig verbrennt. Jeder Motorstart ist daher mit zusätzlichem Kraftstoffverbrauch und besonders umweltschädlichen Emissionen verbunden. Vorzugsweise ist daher das Antriebssystem so ausgebildet, daß die elektrische Maschine wenigstens im wesentlichen bis zum Erreichen der Leerlauf-Drehzahl des Verbrennungsmotors (welche bei Betriebstemperatur üblicherweise zwischen 600 und 800 U/min liegt) antreibend wirkt. Diese Maßnahme läßt den Verbrennungsmotor praktisch erst bei Erreichen seiner Leerlaufdrehzahl anlaufen und läßt so das betrieblich ungünstige Hochlaufen aus eigener Kraft entfallen. Sie vermindert damit den Kraftstoffverbrauch und die besonders schädlichen Emissionen beim Starten und macht zudem den Startvorgang schneller. Die Maßnahme ist also bei Fahrzeugen mit und ohne Start-Stop-Automatik ökologisch besonders vorteilhaft.

Vorteilhaft kann die elektrische Maschine neben ihren Funktionen als Starter und als Generator andere Funktionen ausführen:

Eine erste vorteilhafte Zusatzfunktion besteht darin, daß die elektrische Maschine ein Beschleunigen und/oder Abbremsen der Welle herbeiführt oder unterstützt, beispielsweise um das Kraftfahrzeug zu beschleunigen oder abzubremsen. Zum Abbremsen kann die elektrische Maschine als verschleißfreie, zwecks Energierückgewinnung vorteilhaft generatorische (Retarder-)Bremse dienen. Im Zusammenhang mit einer Antriebs-Schlupf-(ASR-)Regelung kann die elektrische Maschine durch Bremsen schnell das Gesamt-Antriebsmoment und damit den Schlupf eines oder mehrerer Antriebsräder verringern. Bei einem antreibenden Zusatz-Drehmoment zwecks Beschleunigungsunterstützung kann der Verbrennungsmotor bei ungeänderten erreichbaren Fahrzeugbeschleunigungswerten schwächer dimensioniert werden, so daß er im Mittel bei höherem Mitteldruck arbeitet und daher weniger Kraftstoff verbraucht. Somit trägt auch diese Maßnahme zur Verringerung schädlicher Emissionen bei. Die Beschleunigungsunterstützung kann vorteilhaft so gesteuert sein, daß sie die Momentenkennlinie des Verbrennungsmotors glättet, beispielsweise indem sie in einem Drehzahlbereich mit relativ niedrigem Drehmoment (z.B. im sog. "Turboloch" bei einem mit Turbolader aufgeladenen Motor) ein entsprechend größeres Zusatzdrehmoment aufbringt als in anderen Drehzahlbereichen.

Eine weitere Zusatzfunktion besteht darin, daß die elektrische Maschine Drehungleichförmigkeiten aktiv verrringert, indem sie ein schnell alternierendes Drehmoment gegenphasig zu den Drehungleichförmigkeiten erzeugt. Dieses alternierende Drehmoment kann dem konstanten oder langsam variierenden Drehmoment der Generatorfunktion oder ggf. der Brems- oder Boosterfunktion additiv überlagert sein.

Bei den Drehungleichförmigkeiten kann es sich insbesondere um solche handeln, die bei dem Verbrennungsmotor (der insbesondere ein Hubkolbenmotor mit innerer Verbrennung ist) durch die auf die Kurbelwelle wirkenden Gas- und/oder Massenkräfte der einzelnen Hubkolben auftreten. Beispielsweise zeigt ein Vierzylinder-Viertaktmotor relativ große Drehungleichförmigkeiten in der zweiten Ordnung (d.h. dem zweifachen der Drehfrequenz des Motors). Daneben gibt es Drehungleichförmigkeiten bei höheren Ordnungen sowie stochastisch auftretende Ungleichförmigkeiten.

Unter "schnell" wird hier eine Variation im Frequenzbereich der zu verringernden Drehungleichförmigkeiten verstanden, also z.B. bei der Drehungleichförmigkeit der 2. Ordnung und bei einer Drehzahl von 3000 min⁻¹ eine Variation mit einer Frequenz von 100 Hz. Demgegenüber variieren die der Generatorfunktion oder anderen der o.g. Funktionen zugehörigen Drehmomente im allgemeinen langsam oder sie sind konstant.

Sie werden daher im folgenden auch "Gleich-Drehmomente" genannt.

Falls die Amplitude des Wechseldrehmoments größer als das konstante oder langsam variierende Drehmoment ist, zeigt das Gesamt-Drehmoment der elektrischen Maschine - wenn auch gegenüber der Nullinie verschoben - abwechselnd positive und negative Werte. Andernfalls ist das Gesamt-Drehmoment nur positiv oder negativ, wobei dessen Betrag einen schnell variierenden Anteil enthält.

Die bei diesen Zusatzfunktionen gewonnene Energie (also z.B. bei Fahrzeugbremsung, Anfahren mit "schleifender" Kupplung, Abbremsung von Getrieberädern, Bremsung bei positiver Drehungleichförmigkeit) wird vorteilhaft in dem oben genannten (oder einem anderen) Energiespeicher zwischengespeichert und zur Erzeugung von antreibenden Momenten (z.B. zur Fahrzeugbeschleunigung, Beschleunigung von Getrieberädern, Antreiben bei einer negativen Drehungleichförmigkeit) wiederverwendet und/oder in ein Fahrzeugbordnetz und/oder eine Batterie eingespeist. Bei sehr groBen anfallenden. Energiemengen (wie sie z.B. beim Anfahren mit "schleifender" elektromagnetischer Kupplung anfallen können) kann der Energiespeicher vorteilhaft als Schwungradspeicher ausgebildet sein, dessen Schwungrad seinerseits durch eine elektrische Maschine angetrieben und gebremst wird. Alternativ können diese großen Energiemengen verheizt werden, z.B. durch eine elektrische Heizwicklung, die parasitär im Kühlkreislauf des Verbrennungsmotors angeordnet ist (ähnlich einem Tauchsieder).

Um bei einer Fahrzeugbremsung mit Hilfe der elektrischen Maschine einen möglichst hohen Wirkungsgrad der Bremsenergie-Rückgewinnung zu erzielen, entkuppelt man vorteilhaft beim Bremsen die elektrische Maschine vom Verbrennungsmotor, z.B. mit einer dazwischengeschalteten Kupplung, etwa einer Reibkupplung oder Klauenkupplung.

Zur optimalen Ausnutzung des z.B. in einem Kraftfahrzeug zur Verfügung stehenden Bauraumes ist es vorteilhaft, daß in die elektrische Maschine, und zwar insbesondere in deren Läufer, eine Kupplung, vorzugsweise eine als Fahrkupplung dienende Reibkupplung integriert ist. Beispielsweise bei einer Asynchron- und Synchronmaschine mit innenliegendem Läufer kann der Läufer in seinem inneren Bereich funktionslos sein und so zur Aufnahme der Kupplung hohl ausgebildet sein. Durch diese Maßnahme ist es möglich, daß die elektrische Maschine samt im Inneren des Läufers integrierter Kupplung in Axialrichtung nur so viel wie oder kaum mehr Raum in Anspruch nimmt, als bei einem herkömmlichen Kraftfahrzeug die Kupplung alleine. Aufgrund des reduzierten verfügbaren Durchmessers und zur Minimierung des Massenträgheitsmomentes ist auch eine Ausführung als Mehrscheiben- und/oder Lamellenkupplung möglich. Ist die integrierte Kupplung als Naßkupplung ausgebildet, kann das Kupplungsfluid auch für die Kühlung der elektrischen Maschine sorgen. Die Betätigung der Kupplung kann mechanisch, elektrisch, magnetisch, elektromagnetisch, hydraulisch, pneumatisch oder mit Mischformen hiervon erfolgen.

Im übrigen werden in der gesamten vorliegenden Beschreibung Zahlenangaben "x" im Sinn von "wenigstens x", und nur vorzugsweise im Sinn von "genau x" verstanden.

Die Erfindung wird nun anhand von Ausführungsbeispielen und der angefügten schematischen Zeichnung näher erläutert. In der Zeichnung zeigen:
- Fig. 1: eine unmaßstäblich-schematische Darstellung eines Antriebssystems mit einer Ausführungsform des Starter/Generators;
- Fig. 2: eine schematische beispielhafte Darstellung der Funktionsweise des Starter/Generators mit Zusatzfunktion "aktive Schwingungsdämpfung";
- Fig. 3: eine schematische Schnittdarstellung einer elektrischen Maschine mit Schnittebene senkrecht zur Axialrichtung;
- Fig. 4: eine schematische Schnittdarstellung einer elektrischen Maschine mit integrierter Reibkupplung mit Schnittebene in Axialrichtung;
- Fig. 5: einen schematischen Schaltplan eines bei dem Starter/Generator verwendeten Wechselrichters.

In den Figuren tragen im wesentlichen funktionsgleiche Teile gleiche Bezugszeichen.

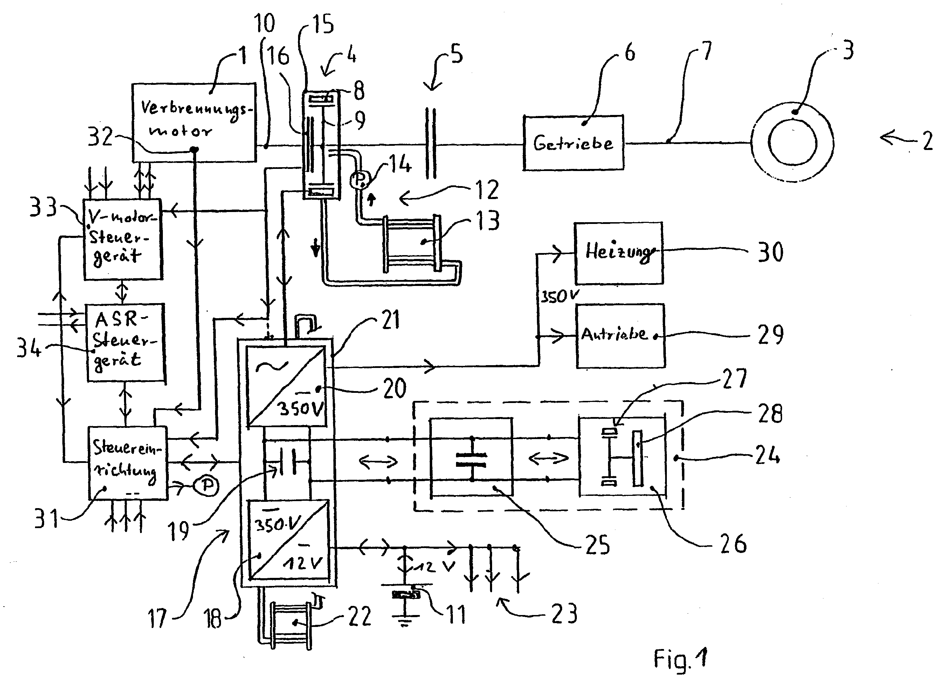

Das in Fig. 1 dargestellte Antriebssystems eines Kraftfahrzeugs, z.B. eines Personenkraftwagens, weist als Antriebsaggregat einen Verbrennungsmotor 1 auf, bei dem es sich beispielsweise um einen Vierzylinder-Viertakt-Otto- oder Dieselmotor handelt. Das vom Verbrennungsmotor 1 erzeugte Drehmoment kann über einen Antriebsstrang 2 auf Antriebsräder 3 übertragen werden. In Abtriebsrichtung ist im Antriebsstrang 2 nach dem Verbrennungsmotor 1 zunächst eine als Starter/Generator dienende elektrische Maschine 4 angeordnet. Auf diese folgen eine Fahrkupplung 5, ein Getriebe 6 und ein Achsantrieb 7, welcher das Drehmoment auf die Antriebsräder 3 überträgt. Bei der Kupplung 5 und dem Getriebe 6 kann es sich um eine Reibkupplung und ein Schaltgetriebe handeln; alternativ sind z.B. eine automatische Kupplung oder Wandlerkupplung, jeweils mit z.B. handbetätigtem Schaltgetriebe oder automatischem Getriebe möglich.

Die elektrische Maschine 4 - hier eine Drehstrom-Wanderfeld-Maschine in Asynchron- oder Synchron-Bauart - umfaßt einen Ständer 8 und einen Läufer 9. Ersterer stützt sich drehfest gegen den Verbrennungsmotor 1, ein (nicht gezeigtes) Fahrzeugchassis oder ein (nicht gezeigtes) Kupplungsgehäuse ab, wohingegen letzterer direkt auf einer Triebwelle (Kurbelwelle) 10 des Verbrennungsmotors 1 oder einer Verlängerung hiervon sitzt und mit dieser drehfest gekoppelt ist. Die Triebwelle 10 und der Läufer 9 rotieren also gemeinsam, ohne Zwischenschaltung eines Getriebes.

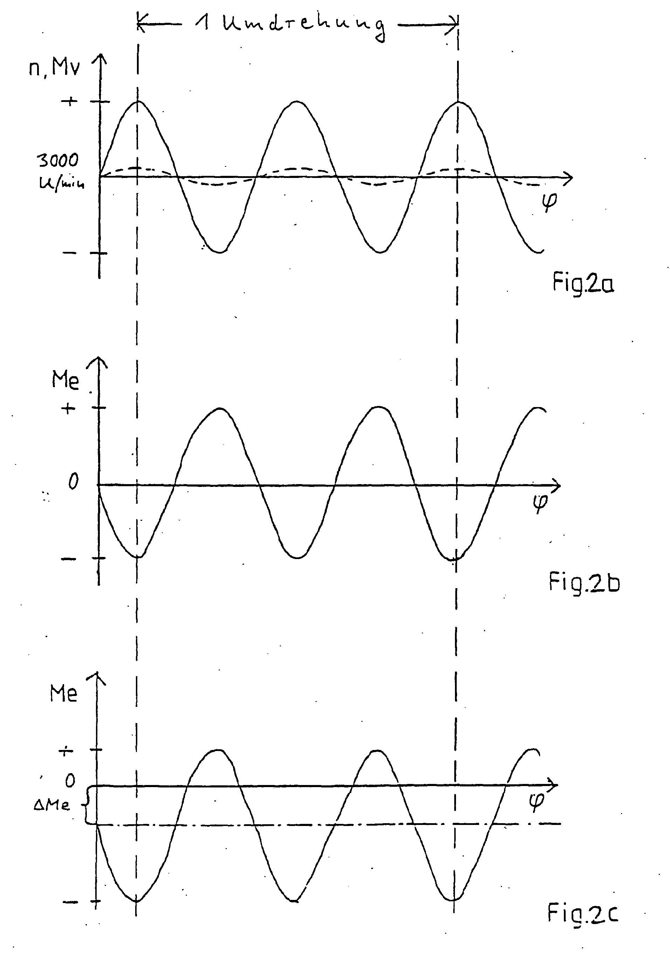

Die elektrische Maschine 4 erfüllt mehrere Funktionen: Sie fungiert einerseits als Generator zur Ladung einer Fahrzeugbatterie 11 und zur Versorgung elektrischer Verbraucher und ersetzt damit eine herkömmlicherweise im Kraftfahrzeug vorhandene Lichtmaschine. Sie fungiert andererseits als Starter, der den Verbrennungsmotor 1 im Zusammenlauf aus dem Stand startet und kann somit auch einen herkömmlicherweise beim Kraftfahrzeug gesondert vorgesehenen Starter ersetzen. Die elektrische Maschine 4 hat weitere fakultative Funktionen: Eine Generatorfunktion mit wesentlich größerem Drehmoment dient zum Abbremsen des Fahrzeugs oder des Verbrennungsmotors 1. Außerdem kann die elektrische Maschine 4 als Zusatzantrieb ("Booster") fungieren, z.B. um den Verbrennungsmotor beim Beschleunigen des Fahrzeugs zu unterstützen. Auch kann sie als aktiver Drehungleichförmigkeits-Verringerer dienen (Fig. 2). Schließlich fungiert sie aufgrund des Massenträgheitsmoments des Läufers 9 als Schwungrad und kann so das bei herkömmlichen Kraftfahrzeugen i.a. vorhandene, auf der Kurbelwelle sitzendes Schwungrad ersetzen.

Die elektrische Maschine 4 wird durch eine Sprühflüssigkeitskühlung 12 innengekühlt. Nach Durchlaufen eines Rückkühlers 13 und einer Pumpe 14 wird die Kühlflüssigkeit - hier ein geeignetes Öl - an den Läufer 9, und zwar in der Nähe von dessen Rotationsachse, gesprüht. Sie wandert aufgrund der Läuferrotation fliehkraftbedingt nach außen und kühlt dabei Läufer 9 und ständer 8, und verläßt dann ein Gehäuse 15 der elektrischen Maschine 4, um in einem geschlossenen Kreislauf wieder in den Kühler 13 einzutreten. Der Kühlmittelfluß erfolgt verlustleistungs- und drehzahlabhängig durch entsprechende Steuerung der Pumpe 14, derart, daß sich jeweils im wesentlichen nur eine gerade benötigte Mindestmenge des Kühlfluids im Inneren des Gehäuses 15 befindet. Ein (nicht gezeigtes) Ausgleichsgefäß erlaubt diese Variation der Kühlfluidmenge im Gehäuse 15. Bei anderen (nicht gezeigten) Ausführungsformen ist der Kühler als parasitärer Kühler, der z.B. in den Kühlkreislauf des Verbrennungsmotors eingesetzt ist. Bei weiteren (nicht gezeigten) Ausführungsformen verfügt die elektrische Maschine nicht über ein eigenes abgeschlossenes Kühlsystem. Sie (oder nur der Läufer) ist z.B. in ein Kupplungs- und/oder Getriebegehäuse integriert und wird durch ein darin befindliches Schmier- und/oder Kühlfluid (z.B. Kupplungs- oder Getriebeöl) mit gekühlt.

Bei einfacheren (nicht gezeigten) Ausführugsformen, bei denen die elektrische Maschine 4 keine Zusatzfunktionen mit hoher Dauerleistung ausführen muß, kann die Kühlung einfacher ausgeführt sein: Hier genügt beispielsweise eine Innenkühlung mit Gas oder nur eine Außenkühlung des Ständers mit Flüssigkeit oder Gas.

Die elektrische Maschine 4 ist außerdem mit einem Drehtransformator 16 (sog. Resolver) ausgerüstet, der vorzugweise mehr als 8 Pole, hier z.B. 12 Pole aufweist. Er besteht aus zwei benachbart angeordneten Leiterplatten, von denen eine feststeht und die andere sich mit der Triebwelle 10 dreht. Die Leiterplatten tragen auf ihren zugewandten Oberflächen durch Leiterbahnen gebildete Windungen, derart daß sich ein drehwinkelabhängiges Transformator-Übersetzungsverhältnis ergibt. Der Drehtransformator 16 arbeitet nach dem Transponder-Prinzip: Die feststehenden Windungen (festehende Platine) werden aktiv mit Strom/Spannung beaufschlagt und strahlen elektromagnetische Energie zu den drehbaren Windungen (drehbare Platine) hin ab. Letztere strahlen einen Teil dieser Energie wieder zurück, wobei dieser Teil aufgrund des drehwinkelabhängigen Übertragungsverhältnisses vom Drehwinkel abhängt. Der rückgestrahlte Teil erzeugt in den feststehenden Windungen ein drehwinkelabhängiges Signal. Eine Auswertung dieses Signals liefert den momentanen Drehwinkel der Triebwelle 10 mit einer Genauigkeit von wenigstens 0,5 Grad. Bei einfacheren Ausführungsformen wird ein Inkrementalgeber verwendet oder völlig auf einen entsprechenden Geber verzichtet.

Ein Wechselrichter 17 liefert den Wicklungen des Ständers 8 der elektrischen Maschine 4 bei einer sehr hohen Taktfrequenz (z.B. 10-100 kHz) sinusbewertete pulsweitenmodulierte Spannungsimpulse, die unter der Wirkung der Maschineninduktivität im wesentlichen sinusförmige Dreiphasen-Ströme ergeben, deren Amplitude, Frequenz und Phase frei vorwählbar ist.

Der Wechselrichter 17 ist ein Spannungszwischenkreis-Wechselrichter und umfaßt drei Baugruppen: einen Gleichspannungsumsetzer 18 (Eingangsbaugruppe), welcher Gleichspannung von einem niedrigen Niveau (hier 12 V) auf ein höheres Zwischenkreisniveau (hier 350 V) und in umgekehrter Richtung umsetzt, einen elektrischen Zwischenkreisspeicher 19, hier ein Kondensator bzw. eine Anordnung parallel geschal teter Kondensatoren, und einen Maschinenwechselrichter 20 (Ausgangsbaugruppe), welcher aus der Zwischenkreis-Gleich spannung die (getaktete) Dreiphasen-Wechselspannung variabler Amplitude, Frequenz und Phase erzeugen kann oder - bei generatorischem Betrieb der elektrischen Maschine 4 - derartige beliebige Wechselspannungen in die Zwischenkreis-Gleichspannung umsetzen kann. Bei anderen (nicht gezeigten) Ausführungsformen liegt das Zwischenkreisniveau am oberen Rand des ohne besonderen Berührungsschutz zulässigen Niederspannungsbereichs, hier 60 V.

Die drei Baugruppen 18, 19, 20 des Wechselrichters 17 sind in einem abschirmenden Gehäuse 21 hermetisch eingeschlossen, welches mit einem geeigneten Siedekühlmittel gefüllt ist. Bei diesem handelt es sich z.B. um einen Fluorkohlenwasserstoff, der bei einem geeigneten Druck (etwa zwischen 50 mbar und 3 bar) einen geeigneten Siedepunkt, z.B. bei 60° C, hat. Verdampftes Siedekühlmittel kann in einem Kondensationskühler 22 kondensieren und in flüssiger Form in einem hermetisch geschlossenen Kreislauf in das Gehäuse 21 zurückkehren.

Der Gleichspannungsumsetzer 18 ist niederspannungsseitig mit der Fahrzeugbatterie 11 und verschiedenen Niederspannungverbrauchern 23, wie beispielsweise Beleuchtung und elektronische Geräte, verbunden. Der Wechselrichter 17 kann einerseits Strom auf niedrigem Spannungsniveau zum Laden der Fahrzeugbatterie 11 und Versorgen der Niederspannungsverbraucher 23 liefern, andererseits kann er der Fahrzeugbatterie 11 Strom auf niedrigem Spannungsniveau zum Starten des Verbrennungsmotors 1 entnehmen. Bei anderen (nicht gezeigten) Ausführungsformen befindet sich die Fahrzeugbatterie auf Zwischenkreisniveau und ist direkt mit dem Zwischenkreis gekoppelt.

Der Zwischenkreisspeicher 19 ist verbunden mit einem externen Zusatzspeicher 24, bei dem es sich um einen elektrischen Speicher, hier eine Zusatzkapazität 25 handelt. Der Zusatzspeicher 24 entlastet die Fahrzeugbatterie 11 beim Startvorgang des Verbrennungsmotors 1, indem dieser vor dem Starten Energie nur relativ langsam entnommen und im Zusatzspeicher 24 gespeichert wird. Hier steht sie dann für eine schnelle Entnahme beim Startvorgang zur Verfügung. Daneben kann er auch der Speicherung derjenigen Energie dienen, die bei durch die elektrische Maschine 4 vermittelten Bremsvorgängen anfällt.Schließlich hat er die Aufgabe, die beim Drehungleichförmigkeits-Verrringern in einer Bremsphase gewonnene Energie zwischenzuspeichern und für die anschließende Antriebsphase wieder abzugeben. Für große zu speichernde Energien kann der Zusatzspeicher 24 ergänzend oder alternativ einen Schwungradspeicher 26 umfassen.

Hingegen hat der (innere) Zwischenkreisspeicher 19 im wesentlichen die Aufgabe, der Maschinen-Wechselrichtergruppe 20 Spannung mit der für das Takten notwendigen hohen Flankensteilheit - also schnell - zu liefern. Er braucht dazu keine sehr hohe Kapazität (er hat z.B. 2 *µ*F), vorteihaft für die Schnelligkeit sind vielmehr geringe Zuleitungsinduktivitäten, was durch die Anordnung im Inneren des Wechselrichters 17 sichergestellt ist (und zwar vorzugsweise auf derselben Platine, auf der auch die elektronischen Schalter des Maschinen-Wechselrichters 20 angeordnet sind). Der Zusatzspeicher 24 kann hingegen relativ langsam arbeiten, so daß hier die Zuleitungskapazitäten aufgrund der externen Anordnung nicht stören. Die Zusatzkapazität 25 kann insbesondere 50 bis 10000 mal größer sein (sie ist hier z.B. 4,7 mF für die Speicherung der Drehungleichförmigkeits-Energie) als die des Zwischenkreisspeichers 19.

Noch größere Speicherkapazitäten sind mit dem Schwungradspeicher 26 erreichbar, der hier eine eigene wechselrichtergesteuerte elektrische Maschine 27 und eine damit gekoppelte Schwungmasse 28 umfaßt. Letztere kann durch ein gesondertes Schwungrad gebildet oder in den Läufer der elektrischen Maschine 27 integriert sein. Das Massenträgheitsmoment der Schwungmasse 28 beträgt vorzugsweise 0,05 bis 2 kgm². Es ist auch möglich, in dem Schwungradspeicher 26 ein Mehrfaches der zum Starten des Verbrennungsmotors 1 benötigten Energie zu speichern und ihm zum Starten schnell (d.h. in weniger als einer Sekunde) die jeweils nötige Startenergie zu entnehmen.

Der Zwischenkreis mit seinem hohen Spannungsniveau (hier 60 V oder 350 V) versorgt verschiedene Hilfsantriebe 29, wie eine Klimamaschine und Servoantriebe, sowie verschiedene Heizeinrichtungen 30, wie Motor- und Katalysatorheizungen mit elektrischer Energie. Während derartige Hochleistungsverbraucher herkömmlicherweise durch mechanische Kopplung vom Verbrennungsmotor 1 angetrieben bzw. durch Abwärme des Verbrennungsmotors 1 beheizt werden, erlaubt das hier zur Verfügung stehende hohe Spannungsniveau einen wirkungsgradmäßig günstigeren, rein elektrischen Antrieb.

Eine Steuereinrichtung 31 gibt dem Wechselrichter 17 durch entsprechende Ansteuerung, seiner Halbleiterschalter zu jedem Zeitpunkt vor, welche Amplitude, Frequenz und Phase die von ihm zu erzeugende Wechselspannung haben soll. Die Steuereinrichtung 31, die beispielsweise durch ein entsprechend programmiertes Mikrocomputer-System gebildet sein kann, bestimmt in einem ersten Schritt den Betrag und die Richtung des Drehmoments, welches die elektrische Maschine 4 zu einem bestimmten Zeitpunkt erzeugen soll. Sie kann dies z.B. mit Hilfe einer Kennfeldsteuerung tun, indem sie als Eingangsinformation vom Drehtransformator 16 die Winkelstellung der Triebwelle 10, die momentane mittlere Drehzahl und ggf. weitere Betriebsparameter, wie z.B. die Drosselklappenstellung, erhält. Zum Starten des Verbrennungsmotors 1 kann das Soll-Drehmoment auf der Grundlage gespeicherter Werte bestimmt werden, die den zeitlichen Soll-Verlauf der Drehzahl oder des Drehmoments der elektrischen Maschine 4 während des Startvorgangs vorgeben, ggf. ergänzt durch eine Messung dieser Größen und eine rückgekoppelte Regelung, welche die Einhaltung der Vorgaben sicherstellt. Ein (nicht gezeigtes) Energieverbrauchs-Steuergerät gibt an, wieviel Energie zum Laden der Fahrzeugbatterie 11, zur Versorgung der Niederspannungsverbraucher 23 und der Hochleistungsverbraucher 29, 30 benötigt wird, so daß die Steuereinrichtung 31 ein entsprechendes bremsendes Drehmoment veranlassen kann. Ein Motorsteuergerät 33 gibt der Steuereinrichtung 31 vor, ob und in welchem Maß die elektrische Maschine 4 zusätzlich fahrzeugbeschleunigend oder -bremsend wirken soll, so daß diese ein entsprechendes Drehmoment, etwa zur Glättung der Moinentenkennlinie des Verbrennungsmotors 1 (z.B. zum Ausfüllen eines "Turbo-Lochs" bei niedrigern Drehzahlen), erzeugen kann. Entsprechend gibt ein ASR-Steuergerät 34 (ASR=Antriebs-Schlupf-Regelung) der Steuereinrichtung 31 bei Vorliegen von Antriebsschlupf vor, daß die elektrische Maschine 4 vorübergehend als generatorische Bremse wirken soll, ggf. bevor das ASR-Steuergerät bei verbleibendem Antriebsschlupf als massivere Maßnahme ein Einbremsen der betroffenen Antriebsräder durch die Radbremse veranlaßt. Zusätzlich kann das ASR-Steuergerät seine Schlupfinformation an das Motorsteuergerät 33 übergeben, um außerdem eine Verringerung des Verbrennungsmotor-Drehmoments zu veranlassen. Das Motorsteuergerät 33 kann auch eine automatische Start-Stop-Steuerung durchführen und der Steuereinrichtung 31 vorgeben, ob die elektrische Maschine 4 den Verbrennungsmotor 1 starten soll.

Die aktive Verringerung von Drehungleichförmigkeiten kann so gesteuert werden, daß aus einem gespeicherten Kennfeld die momentan zu erwartende Drehungleichförmigkeit in Abhängigkeit von den o.g. Betriebsparametern ermittelt wird. Eine andere Möglichkeit besteht darin, die tatsächlich momentan vorliegende Drehungleichförmigkeit zu ermitteln, z.B. durch Berechnung der momentanen Drehgeschwindigkeit auf der Grundlage der vom Drehtransformator 16 gelieferten Information und/oder durch Auswertung der momentan im Verbrennungsmotor 1 vorliegenden Gasdrücke, welche mit Hilfe von Gasdrucksensoren 32 detektierbar sind, oder durch Erfassung der momentanen Drehmoments des Verbrennungsmotors 1 mit Hilfe einer (nicht gezeigten) Drehmomentnabe im Antriebsstrang. Möglich ist auch eine Kombination von Regelung und Steuerung. Aus dem so ermittelten Wert für die momentane Drehungleichförmigkeit wird ein entsprechender (gegenphasiger) Wert für das schnell variierende Soll-Drehmoment der elektrischen Maschine 4 abgeleitet, das dem bremsenden (oder ggf. antreibenden) Gleich-Drehmoment additiv überlagert wird.

In einem zweiten Schritt bestimmt die Steuereinrichtung 31, welche Amplitude, Frequenz und Phase der Spannung bzw. des Stroms vom Wechselrichter 17 bereitgestellt werden muß, damit die elektrische Maschine 4 dieses Soll-Gesamtdrehmoment herbeiführt. Diese Bestimmung erfolgt bei der elektrischen Asynchronmaschine auf der Grundlage einer feldorientierten Regelung, welche auf einer Modellrechnung der elektrischen Maschine 4 beruht und als Eingangsinformation im wesentlichen die meßbaren elektrischen Ständergrößen (Amplitude, Frequenz und Phase von Strom und Spannung) und die momentane mittlere Läuferdrehzahl verwendet oder sich aus elektrischen Größen ableitet.

In Fig. 1 ist die Steuereinrichtung 31 als außerhalb des Wechselrichtergehäuses 21 angeordnet dargestellt. Um an der Siedebadkühlung zu partizipieren, ist sie jedoch bei anderen (nicht gezeigten) Ausführungsformen im Inneren des Wechselrichtergehäuses 21 angeordnet.

Die Steuereinrichtung 31 kann verschiedene, zur Erfüllung ihrer Steueraufgaben dienende Sensoren bzw. davon abgeleitete Sensorinformationen mit dem Motorsteuergerät 33 zur Steuerung des Verbrennungsmotors 1 teilen. Es kann sich z.B. um den Drehtransformator 16 (Winkellagegeber), die Gasdrucksensoren 32, daneben (nicht gezeigte) Sensoren zur Erfassung der mittleren Drehzahl, des Lastzustandes des Verbrennungsmotors 1 (z.B. über die Drosselklappenstellung) und dessen Drehmoments (z.B. mit Hilfe einer Drehmomentnabe) handeln.

Die bei den Zusatzfunktionen durch Bremsen gewonnene Energie wird im Zusatzspeicher 24 zwischengespeichert, um zum späteren Antreiben der elektrischen Maschine 4 wiederverwendet oder der Fahrzeugbatterie 11 zugeleitet zu werden.

Die Fig. 2a - 2c veranschaulichen den Generatorbetrieb zusammen mit der Zusatzfunktion "aktive Schwingungsdämpfung". Fig. 2a zeigt (mit durchgezogener Linie) die Drehzahl n der Kurbelwelle 10 als Funktion des Kurbelwellenwinkels ϕ. Die Welle führt um eine mittlere Drehzahl (hier 3000 Umdrehungen pro Minute) periodisch Drehzahlschwankungen zu kleineren und größeren Drehzahlen hin aus, welche in diesem idealisierten Beispiel insgesamt einen im wesentlichen sinusförmigen Verlauf haben. Es handelt sich um von den Gas- und Massenkräften herrührende Drehungleichförmigkeiten, die hier in der zweiten Ordnung (d.h. bei einer Frequenz von 100 Hz) auftreten. Zur Veranschaulichung ist auch das für eine Umdrehung der Welle benötigte Winkelintervall eingezeichnet. Im wesentlichen proportional zu den Drehungleichförmigkeiten sind Schwankungen des Drehmoments Mv des Verbrennungsmotors um ein mittleres Drehmoment. Die durchgezogene Linie in Fig. 2a veranschaulicht damit auch den Verlauf des Motor-Drehmoments Mv als Funktion des Kurbelwellenwinkels ϕ.

Fig. 2b zeigt das von der elektrischen Maschine 4 als Funktion des Wellenwinkels ϕ aufgebrachte Drehmoment Me, wobei zwecks besserer Anschaulichkeit der zur Generatorfunktion gehörige bremsende Drehmomentanteil noch nicht dargestellt ist. Der Verlauf des Maschinendrehmoments Me ist im wesentlichen gegenphasig betragsgleich zur Ungleichförmigkeit des Motor-Drehmoments Mv. Im Ergebnis wird die Drehungleichförmigkeit - und die zu ihr proportionale Schwankung des Drehmoments Mv - wesentlich verringert, oder sie verschwindet sogar praktisch, wie in Fig. 2a durch die gestrichelte Linie veranschaulicht ist.

In Fig. 2b sind die negativen und positiven Drehmomentextrema betragsmäßig gleich groß. Die bei einer Bremsphase gewonnene Energie ist also im wesentlichen gleich groß wie die bei der folgenden Antriebsphase aufzuwendende Energie. Der Energiefluß nach außen ist somit Null, es wird nur im Inneren des System zeitweise Bremsenergie zwischengespeichert. Das System arbeitet also gemäß Darstellung der Fig. 2b als reiner Drehungleichförmigkeits-Verringerer mit schnell variierendem Drehmoment, ohne Generatorfunktion.

Fig. 2c zeigt die Überlagerung beider Funktionen: Die Generatorfunktion verschiebt das Drehmoment gemäß Fig. 2b global um einen bestimmten Betrag ΔMe (den sog. Hub) in negative Richtung. Der Hub ΔMe variiert i. a. langsam, in dem hier dargestellten kurzen Zeitraum von ungefähr einer Umdrehungsperiode ist er in guter Näherung konstant. Er ist für die üblicherweise benötigten Generatorleistungen kleiner als die Amplitude der schnellen Variation des Drehmoments, so daß das Gesamt-Drehmoment Me alternierend positive und negative Werte annimmt. Gemittelt über die schnelle Drehmomentvariation erhält man ein konstantes Drehmoment - ΔMe. Dem Verbrennungsmotor wird also im Mittel mechanische Energie entzogen, die in elektrische Energie umgewandelt und dem System zum Laden der Fahrzeugbatterie 11 und/oder zum Betreiben elektrischer Verbraucher 23, 29, 30 entnommem wird. Bei reiner Generatorfunktion ohne Schwingungsdämpfung erzeugt die elektrische Maschine 4 ein konstantes Drehmomententsprechend der strichpunktierten Linie ΔMe in Fig. 2c.

Falls z.B. bei Fahrzeugbremsung der Hub ΔMe größer als die Amplitude zur Verringerung der Drehungleichförmigkeit wird, wirkt die elektrische Maschine 4 nur noch bremsend und nicht mehr antreibend. Der globale Drehmomentverlauf kann auch in positiver Richtung verschoben sein (positiver Hub). Die elektrische Maschine arbeitet dann als (antreibender) Motor, z.B. um den Verbrennungsmotor bei einer Fahrzeugbeschleunigung zu unterstützen.

Allein durch eine entsprechende Einstellung der (Software-)Steuerung der elektrischen Maschine - ohne jegliche konstruktive (Hardware-)Änderungen - sind kleine und sehr große Generatorleistungen einstellbar. Begrenzend wirkt nur die Größe der elektrischen Maschine und der Leistungselektronik. Damit kann ein und der selbe Maschinentyp beispielsweise für kleine und große Kraftfahrzeugtypen ohne konstruktive Anpassung verwendet werden.

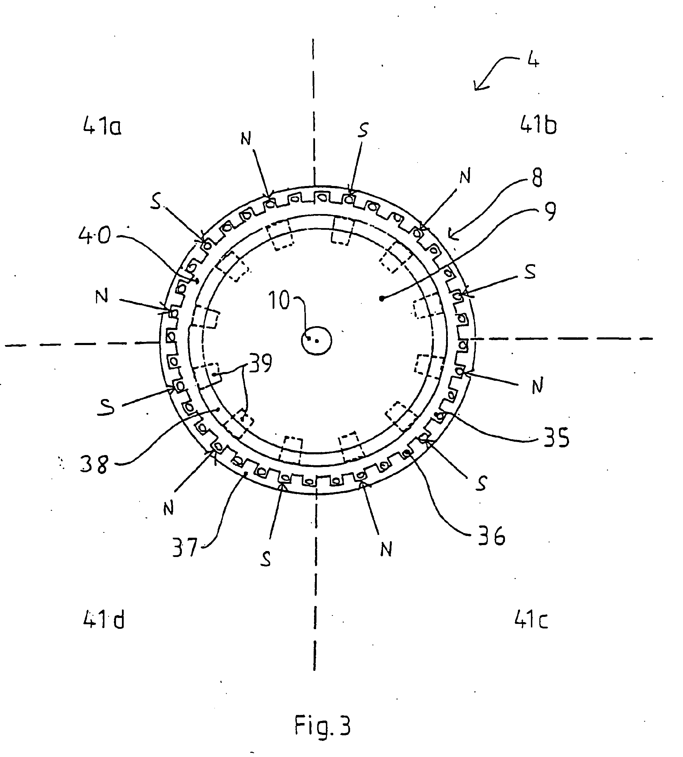

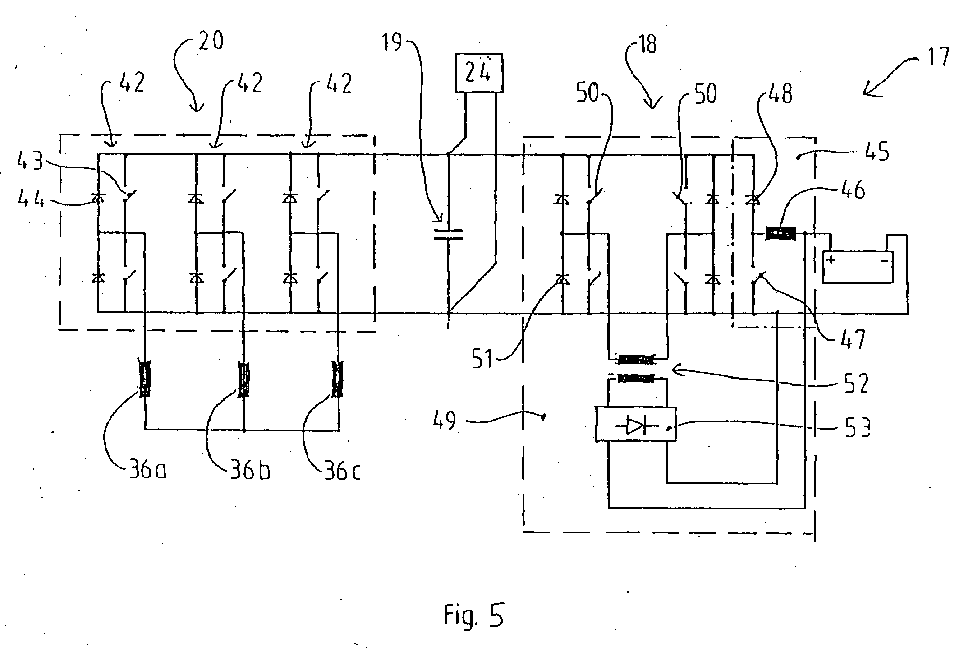

Die in Fig. 3 näher dargestellte elektrische Maschine 4 ist bürsten- bzw. schleiferlos und damit verschleißfrei. Sie hat einen Außendurchmesser von ungefähr 300 mm und eine Länge in Axialrichtung von 70 mm und erbringt bei einem Gewicht von 10-15 kg ein Dauerdrehmoment von ca. 50 Nm und ein Spitzendrehmoment von ca. 150 Nm. Sie kann Drehzahlen erreichen, die den Spitzendrehzahlen üblicher Verbrennungsmotoren (ca. 6000 bis 10000 U/min) entspricht und ist drehzahlfest bis 14000 U/min. Die elektrische Maschine 4 hat einen außenliegenden Ständer 8, welcher Nuten 35 in Richtung der Triebwelle 10 (Axialrichtung) aufweist. Der Ständer 8 trägt eine Drei-Phasen-Wicklung 36, die so ausgebildet ist, daß sie bei Beaufschlagung mit Drei-Phasen-Strom zwölf magnetische Pole ausbildet. Pro Pol sind drei Nuten 35, insgesamt also sechsunddreißig Nuten 35 vorhanden. (Bei anderen (nicht gezeigten) Ausführungsformen sind zwecks Verringerung von Streueffekten pro Pol wenigstens sechs, bevorzugt neun Nuten vorhanden.) Die Pole laufen mit der Drehstrom-Oszillation in einer Kreisbewegung im Ständer 8 um. Für einen bestimmten Zeitpunkt ist ihre momentane Lage durch Pfeile, welche die Bezugszeichen "S" (für Südpol) und "N" (für Nordpol) tragen, veranschaulicht. Ein die Nuten 35 nach außen abschließender, in Umfangsrichtung durchgehender Rückenteil 37 ist in Radialrichtung relativ dünn, seine Dicke beträgt (an der Stelle einer Nut 35) beispielsweise 3-25 mm. Der Ständer 8 ist aus dünnen Statorblechen (die Dicke beträgt hier 0,25 mm) aus einem Material mit niedrigen Ummagnetisierungsverlusten (hier kleiner als 1 W/kg bei 50 Hz und einem Tesla) aufgebaut, mit senkrecht zur Axialrichtung verlaufenden Blechebenen.

Der innenliegende Läufer 9 ist bei der Asynchron-Maschine als Käfigläufer mit im wesentlichen in Axialrichtung verlaufenden Käfigstäben, die jeweils stirnseitig mit einem Kurzschlußring 38 verbunden sind, ausgebildet. Beim der Synchronmaschine trägt der Läufer 9 die gleiche Anzahl von Polen wie der Ständer 8 (hier zwölf Pole), die durch Permanentmagnete oder entsprechend erregte Spulen gebildet sein können. In Fig. 3 ist die Synchronmaschine ebenfalls veranschaulicht, indem die bei ihr vorhandenen Läuferpole (Bezugsziffer 39) schematisch angedeutet sind. Strom zur Speisung der (nicht gezeigten) Läuferwicklung, welche diese Pole hervorbringt, wird dem Läufer über Schleifringe zugeführt.

Der Luftspalt 40 zwischen Läufer 9 und Ständer 8 ist relativ groß; seine Weite beträgt hier 1 mm.

Bei anderen (nicht gezeigten) Ausführungsformen ist der Läufer außenliegend und der Ständer innenliegend.

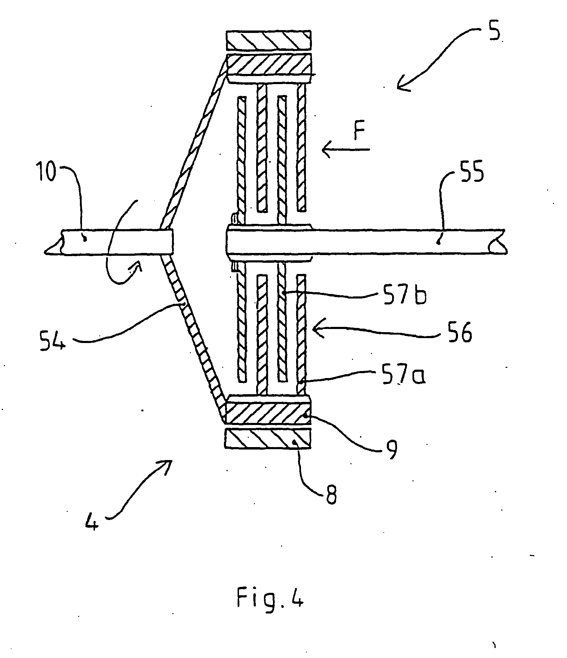

Bei der Ausführungsform gemäß Fig. 4 ist in der elektrischen Maschine 4 die Kupplung 5 praktisch vollständig integriert. Innerhalb des z.B. am Motor- oder Getriebegehäuse drehfest-gelagerten Ständers 8 ist der Läufer 9 an seiner Peripherie einseitig über einen axial seitlich ausragenden Käfig 54 mit der Triebwelle 10 des Verbrennungsmotors 1 drehfest verbunden. Der Läufer 9 ist innen hohl und hat im wesentlichen die Form eines flachen Kreiszylinder-Mantels. In dem Hohlraum ist die Kupplung 5 - hier eine als Fahrkupplung fungierende Lamellenkupplung (Vielflächen-Reibscheibenkupplung) - angeordnet. Sie kann einen Kraftschluß zwischen der Triebwelle 10 mit dem Läufer 9 und einer in den Hohlraum ragenden Abtriebswelle 55 zum Getriebe 6 herstellen. Hierzu ist der Läufer 9 innenverzahnt und die Abtriebswelle 55 im Bereich des Hohlraums 55 außenverzahnt. In dem Raum dazwischen ist ein Scheibenpaket 56 angeordnet, dessen Scheiben 57 abwechselnd außen- und innenverzahnt sind, so daß abwechselnd jeweils eine Scheibe mit dem Läufer 9 (Außenlamelle 57a) und die nächste Scheibe mit der Abtriebswelle 55 (Innenlamelle 57b) formschlüssig verbunden ist. Ohne axialen Druck können die Außen- und Innenlamellen 57a, 57b praktisch frei gegeneinander rotieren, die Wellen 10, 55 sind dann entkuppelt. Preßt man die Außen- und Innenlamellen 57a, 57b mit Hilfe einer (nicht dargestellten) Druckvorrichtung (z.B. eines Winkelhebels) in Axialrichtung zusammen, stellen die entstehenden Reibkräfte den Kratfschluß zwischen den Wellen 10, 55 her, so daß sich das vom Verbrennungsmotor 1 und der elektrischen Maschine 4 erzeugte Drehmoment auf die Abtriebswelle 55 überträgt. Der Kraftschlußteil (d.h. hier das Scheibenpaket 56) der Kupplung 5 findet vollständig im Läufer 9 Platz, ragt also nicht etwa in Axialrichtung seitlich aus ihm heraus. Die Kupplung 5 ist als Naßkupplung ausgeführt. Das Kupplungsöl dient gleichzeitig der Kühlung der elektrischen Maschine 4. Bei anderen (nicht gezeigten) Ausführungsformen sind andere schaltbare kraftschlüssige Kupplungen integriert, z.B. eine Einscheiben-Kupplung in Trocken- oder Naßbauweise.

Fig. 5 zeigt einen schematischen Schaltplan des Wechselrichters 17. Man erkennt den Zwischenkreisspeicher 19 in Form einer Kapazität, welcher der (hier nicht näher dargestellte) Zusatzspeicher 24 parallelgeschaltet ist. Die Kapazität symbolisiert eine Parallelschaltung mehrerer Kondensatoren.

Der Maschinenwechselrichter 20 wird durch drei parallelgeschaltete (aber unabhängig schaltbare) Schaltergruppen 42 gebildet, wobei jede der Schaltergruppen 42 für die Erzeugung jeweils einer der drei Drei-Phasen-Spannungen zuständig ist. Jede der Schaltergruppen 42 ist eine Serienschaltung zweier (unabhängig schaltbarer) Schalter 43 zwischen dem Plus- und dem Minuspol des Zwischenkreises. Die Serienschaltung ist mittig (d.h. zwischen den Schaltern 43) mit einer Seite jeweils einer der drei Wicklungen 36a, 36b, 36c der Drei-Phasenwicklung 36 verbunden; an der anderen Seite sind die drei Wicklungen 36a, 36b, 36c miteinander verbunden.

Parallel zu den Schaltern 43 ist jeweils eine Freilaufdiode 44 geschaltet. Sie ist so gepolt, daß sie normalerweise sperrt und, nur wenn der gegenüberliegende Schalter geöffnet wird, einen aufgrund von Selbstinduktion erzeugten, kurzzeitigen Stromfluß in Gegenrichtung durchläßt.

Jeder Schalter 43 symbolisiert eine Parallelschaltung von mehreren (z.B. fünf) MOS-Feldeffektransistoren, welche von der Steuereinrichtung 31 zur Bildung eines Drei-Phasen-Stroms gewünschter Amplitude, Frequenz und Phase direkt angesteuert werden.

Der Gleichspannungsumsetzer 18 umfaßt zwei Unter-Baugruppen, nämlich eine, welche elektrische Energie von dem niedrigen Spannungsniveau (12 V) auf das hohe Zwischenkreis-Spannungsniveau (60 V bzw. 350 V) bringen kann, und eine andere, welche - umgekehrt - elektrische Energie von dem hohen Spannungsniveau (60 V bzw. 350 V) auf das niedrige Spannungsniveau (12 V) bringen kann. Bei Ausführungsformen mit im Zwischenkreis angeordneter Fahrzeugbatterie kann die erstgenannte Unter-Baugruppe entfallen.

Bei der ersten Unter-Baugruppe handelt es z.B. sich um einen Hochsetzsteller 45. Dieser wird durch eine Serienschaltung einer mit dem Pluspol der Fahrzeugbatterie 11 verbundenen Induktivität 46 und einen mit deren Minuspol und dem Minuspol des Zwischenkreises verbundenen Schalter 47 gebildet, wobei diese Serienschaltung mittig über eine (in Durchlaßrichtung gepolte) Hochsetzdiode 48 mit dem Pluspol des Zwischenkreises verbunden ist. Bei geschlossenem Schalter 47 fließt ein Kreisstrom vom Plus- zum Minuspol der Fahrzeugbatterie 11. Nach Öffnen des Schalters 47 sucht eine Selbstinduktionsspannung ein Zusammenbrechen dieses Stromes zu verhindern, mit der Folge, daß kurzzeitig das hohe Zwischenkreis-Spannungsniveau (350 V) überschritten wird und Strom durch die (ansonsten sperrende) Hochsetzdiode 48 fließt und den Zwischenkreisspeicher 19 auflädt. Durch periodisches Öffnen und Schließen des Schalters 47 erzielt man einen quasi-stationären Ladestrom, z.B. als Vorbereitung des Startvorgangs. Bei dem Schalter 47 handelt es sich um einen Halbleiterschalter, welcher direkt von der Steuereinrichtung 31 angesteuert wird.

Die zweite Unter-Baugruppe ist z.B. ein Spannungsuntersetzer 49, der ähnlich einem Schaltnetzteil funktioniert. Er umfaßt zwei Serienschaltungen von Schaltern 50 zwischen dem Plus- und Minuspol des Zwischenkreises, mit jeweils parallelgeschalteten Freilaufdioden 51. Die Enden einer Primärwicklung eines Hochfrequenz(HF)-Transformators 52 sind jeweils mit den Mitten dieser Serienschaltungen verbunden. Die Sekundärwicklung des HF-Transformators 52 speist eine Gleichrichtungs- und Glättungseinheit 53, welche wiederum die Fahrzeugbatterie 11 und ggf. Niederspannungsverbraucher 23 speist. Die Schalter 50 symbolisieren Halbleiterschalter, welche direkt von der Steuereinrichtung 31 angesteuert werden. Durch periodisches Öffnen und Schließen der Schalter läßt sich ein hochfrequenter Wechselstrom erzeugen, welcher in der Sekundärwicklung des HF-Transformators 52 eine entsprechende Wechselspannung auf niedrigerem Spannungsniveau induziert, welche durch die Einheit 53 gleichgerichtet und geglättet wird. Der genaue Wert der resultierenden Gleichspannung läßt sich mit Hilfe der Schalter 50 durch Variation der Schaltfrequenz genau einstellen.

Bei Ausführungsformen mit einer Synchronmaschine benötigt man im Generatorbetrieb keine aktiv gesteuerten Halbleiterschalter, hier genügen zur Bildung einer Gleichrichter funktion spannungsgesteuerte Ventile. Mit aktiv gesteuerten Schaltern erzielt man aber höhere Leistung.

## Patentansprüche

1. Starter/Generator für einen Verbrennungsmotor (1) eines Kraftfahrzeugs, mit
- einem in einem Niederspannungsbordnetz liegenden Energiespeicher (11);
- einer elektrischen Drehfeldmaschine (4), welche die Starter- und Generatorfunktion ausübt, wobei der Läufer (9) der elekrischen Maschine (4) drehfest ohne Zwischenschaltung einer Kupplung mit der Kurbelwelle des Verbrennungsmotors (1) gekoppelt ist, so daß die elektrische Maschine (4) permanent mit gleicher Drehzahl wie der Verbrennungsmotor (1) dreht, und wobei die elektrische Maschine (4) den Verbrennungsmotor (1) durch Zusammenlauf aus dem Stand startet; und
- wenigstens einem Wechselrichter (17), der die für die magnetischen Felder der elektrischen Maschine (4) benötigten Spannungen und/oder Ströme variabler Frequenz, Amplitude und/oder Phase erzeugt;
**dadurch gekennzeichnet, daß**
- die Erzeugung der Spannungen und/oder Ströme durch sinusbewertete Pulsmodulation mit einer Taktfrequenz größer 10 kHz erfolgt;
- der Wechselrichter (17) einen Zwischenkreis mit einem gegenüber dem Niederspannungsbordnetz erhöhten Spannungsniveau aufweist;
- der Wechselrichter (17) im Zwischenkreis mit einem ersten Energiespeicher (19) zum Bereitstellen von Spannung mit der für das Takten notwendigen Flankensteilheit und mit einem zweiten Energiespeicher (24) größerer Speicherkapazität zum Speichern von Energie für den Starterbetrieb ausgerüstet ist;
- wobei sowohl die Energieentnahme aus dem Zwischenkreis im Starterbetrieb der elektrischen Maschine (4) als auch die Energieeinspeisung in den Zwischenkreis im Generatorbetrieb auf dem erhöhten Spannungsniveau erfolgt.

2. Starter/Generator nach Anspruch 1, bei welchem die elektrische Maschine (4) eine Asynchronmaschine, eine Synchronmaschine oder eine Reluktanzmaschine ist.

3. Starter/Generator nach Anspruch 1 oder 2, wobei eine drehfelderzeugende Wirkeinheit (Ständer 8) der elektrischen Maschine (4) wenigstens acht Pole (39) aufweist.

4. Starter/Generator nach einem der vorhergehenden Ansprüche, bei welchem die elektrische Maschine (4) eine hohe maximale Polwechselfrequenz, insbesondere zwischen 300 und 1600 Hz und mehr, hat.

5. Starter/Generator nach einem der vorhergehenden Ansprüche, bei welchem der Ständer (8) der elektrischen Maschine (4) dünne Ständerbleche, insbesondere mit einer Dicke von 0,35 mm oder weniger, aufweist und/oder die Ständerbleche aus einem Material mit niedrigen Ummagnetisierungsverlusten, insbesondere kleiner als 1 Watt/Kilogramm bei 50 Hz und einem Tesla, gefertigt sind.

6. Starter/Generator nach einem der vorhergehenden Ansprüche, bei welchem die elektrische Maschine (4) Wickelköpfe aufweist, die einen axialen Überstand zwischen 5mm und 25mm pro Seite des Ständers (8) der elektrischen Maschine (4) haben.

7. Starter/Generator nach einem der vorhergehenden Ansprüche, bei welchem der Luftspalt zwischen Läufer (9) und Ständer (8) der elektrischen Maschine (4) zwischen 0,5mm und 1,5mm beträgt.

8. Starter/Generator nach einem der vorhergehenden Ansprüche, bei welchem die Rückendicke des Ständers (8) der elektrischen Maschine zwischen 15mm und 30mm beträgt.

9. Starter/Generator nach einem der vorhergehenden Ansprüche, bei welchem die elektrische Maschine (4) eine innere Fluidkühlung, insbesondere eine Sprühflüssigkeitskühlung (12), aufweist, wobei die Zufuhr des Kühlfluids insbesondere verlustleistungs- und/oder drehzahlabhängig erfolgt.

10. Starter/Generator nach einem der vorhergehenden Ansprüche, bei welchem die elektrische Maschine (4) stark im Bereich magnetischer Sättigung arbeitet, insbesondere bei einem Strombelag (bei max. Drehmoment) von wenigstens 400 bis 1000 A/cm Luftspaltlänge in Umfangsrichtung.

11. Starter/Generator nach einem der vorhergehenden Ansprüche, bei welchem die elektrische Maschine (4) eine hohe Drehmomentdichte - bezogen auf das maximale Drehmoment - aufweist, insbesondere größer als 0,01 Nm/cm³.

12. Starter/Generator nach einem der vorhergehenden Ansprüche, bei welchem elektronische Schalter (43, 47, 50) des Wechselrichters (17) fluidgekühlt, insbesondere siedebadgekühlt, sind.

13. Starter/Generator nach einem der vorhergehenden Ansprüche, bei welchem mehrere elektronische Schalter (43) des Wechselrichters (17), insbesondere 2 bis 20 und mehr, parallel geschaltet sind.

14. Starter/Generator nach einem der vorhergehenden Ansprüche, bei welchem der Wechselrichter (17) als Schalter (43, 47, 50) Halbleiterschalter, insbesondere schnelle Halbleiterschalter, wie Feldeffekttransistoren, bipolare Transistoren und/oder bipolare Transistoren mit isoliertem Gateanschluß (IGBTs) umfaßt.

15. Starter/Generator nach einem der vorhergehenden Ansprüche, bei welchem aus dem Zwischenkreis Hilfsmaschinen, wie Klimamaschinen (29), Servoantriebe (30), Pumpen, elektrisch auf einem hohen Spannungsniveau angetrieben werden.

16. Starter/Generator nach einem der vorhergehenden Ansprüche, bei welchem die elektrische Maschine (4) auch als Generator für Heizzwecke dient.

17. Starter/Generator nach einem der vorhergehenden Ansprüche, welcher Teil eines Antriebssystems mit einer automatischen Start-Stop-Steuerung des Verbrennungsmotors (1) ist.

18. Starter/Generator nach einem der vorhergehenden Ansprüche, bei welchem die elektrische Maschine (4) ein Beschleunigen und/oder Abbremsen der Triebwelle herbeiführen oder unterstützen kann, insbesondere um ein Fahrzeug zu beschleunigen bzw. abzubremsen und/oder um im Rahmen einer Anti-Schlupf-Regelung durch Bremsen des Verbrennungsmotors und/oder wenigstens eines Antriebsrades den Schlupf eines Antriebsrades zu verringern.

19. Starter/Generator nach einem der vorhergehenden Ansprüche, bei welchem die elektrische Maschine (4) außerdem der Verringerung von Drehungleichförmigkeiten dient, indem sie ein schnell alternierendes gegenphasiges Drehmoment erzeugt.

## Claims

1. A starter/generator for an internal combustion engine (1) of a motor vehicle, with
- an energy storage unit (11) located in a low-voltage on-board power system
- an electric rotary field machine (4) which executes the starter and generator function, whereby the rotor (9) of the electric machine (4) is coupled in a torqueproof manner without the insertion of a clutch with the crankshaft of the internal combustion engine (1), so that the electric machine (4) permanently rotates at the same speed as the internal combustion engine (1), and whereby the electric machine (4) starts the internal combustion engine (1) from a standing start by convergence; and
- at least one inverter (17) which generates the required voltages and/or currents for the magnetic fields of the electric machine (4) at a variable frequency, amplitude and/or phase
**characterized in that**
- the generation of the voltages and/or currents by sinus-evaluated pulse modulation is achieved with a clock frequency higher than 10 kHz
- the inverter (17) comprises an intermediate circuit with an increased voltage level in relation to the low-voltage on-board power system
- the inverter (17) is equipped in the intermediate circuit with a first energy storage unit (19) for providing voltage with the necessary flank steepness required for clocking, and with a second energy storage unit (24) with a higher storage capacity for storing energy required for the starter operation
- whereby both the energy removal from the intermediate circuit while the electric machine (4) is in starter mode and the energy feed into the intermediate circuit in generator mode is conducted at an increased voltage level

2. A starter/generator according to claim 1, in which the electric machine (4) is an asynchronous machine, synchronous machine or a reluctance machine.

3. A starter/generator according to either of claims 1 or 2, whereby a rotary field-generated active unit (stator 8) of the electric machine (4) comprises at least eight poles (39).

4. A starter/generator according to any one of the above claims, in which the electric machine (4) has a high maximum pole frequency, in particular between 300 and 1,600 kHz and above.

5. A starter/generator according to any one of the above claims, in which the stator (8) of the electric machine (4) comprises thin stator sheets, in particular with a thickness of 0.35 mm or less, and/or the stator sheets are made of a material with low reverse magnetisation losses, in particular, less than 1 Watt/kilogram at 50 Hz and one Tesla.

6. A starter/generator according to any one of the above claims, in which the electric machine (4) comprises coil ends which have an axial protrusion of between 5 mm and 25 mm for each side of the stator (8) of the electric machine (4).

7. A starter/generator according to any one of the above claims, in which the air gap between the rotor (9) and the stator (8) of the electric machine (4) is between 0.5 mm and 1.5 mm.

8. A starter/generator according to any one of the above claims, in which the rear thickness of the stator (8) of the electric machine is between 15 mm and 30 mm.

9. A starter/generator according to any one of the above claims, in which the electric machine (4) comprises inner gas/fluid cooling, in particular a spray fluid cooling (12), whereby the feed of the cooling gas/fluid is achieved in par6ticular in dependence on the power loss and/or the speed.

10. A starter/generator according to any one of the above claims, in which the electric machine (4) operates strongly in the range of magnetic saturation, in particular with a current density (at max. torque) of at least 400 to 1,000 A/cm air gap length in the circumferential direction.

11. A starter/generator according to any one of the above claims, in which the electric machine (4) comprises a high torque density - in relation to the maximum torque in particular, higher than 0.01 Nm/cm³.

12. A starter/generator according to any one of the above claims, in which electronic switches (43, 37, 50) of the inverter (17) are gas/fluid-cooled, in particular, cooled in a simmering bath.

13. A starter/generator according to anyone of the above claims, in which several electronic switches (43) of the inverter (17), in particular, between 2 and 20 and more, are switched in parallel.

14. A starter/generator according to any one of the above claims, in which the inverter (17) comprises as switches (43, 37, 50) semiconductor switches, in particular rapid semiconductor switches, such as field effect transistors, bi-polar transistors and/or bi-polar transistors with insulated gate connection (IGBTs).

15. A starter/generator according to any one of the above claims, in which from the intermediate circuit, auxiliary machines, such as air conditioning machines (29), servo drives (30) and pumps are electrically driven at a high voltage level.

16. A starter/generator according to any one of the above claims, in which the electric machine (4) is also used as a generator for heating purposes.

17. A starter/generator according to any one of the above claims, which is part of a drive system with an automatic start-stop control of the internal combustion engine (1).

18. A starter/generator according to any one of the above claims, in which the electric machine (4) can generate or support an acceleration and/or braking of the drive shaft, in particular in order to accelerate or brake a vehicle and/or for anti-slip regulation purposes, in order to reduce the skid of a drive wheel by braking the internal combustion engine and/or at least one drive wheel.

19. A starter/generator according to any one of the above claims, in which the electric machine (4) is aloe used to reduce uneven rotation formations by generating a rapidly alternating counterphase torque.

## Revendications

1. Démarreur/alternateur pour un moteur à combustion (1) d'un véhicule automobile, ayant
- un accumulateur d'énergie (11) situé dans un réseau de bord basse tension ;
- une machine à champ tournant électrique (4), qui assure la fonction de démarreur et d'alternateur, le rotor (9) de la machine électrique (4) étant couplé, bloqué en rotation, sans intercalation d'un embrayage, au vilebrequin du moteur à combustion (1), de sorte que la machine électrique (4) tourne en permanence au même régime que le moteur à combustion (1), et la machine électrique (4) lançant le moteur à combustion (1) par marche solidaire à partir de l'arrêt ; et
- au moins un onduleur (17), qui produit les tensions et/ou courants de fréquence, d'amplitude et/ou de phase variables, qui sont nécessaires pour les champs magnétiques de la machine électrique (4) ;
**caractérisé en ce que**
- la production des tensions et/ou des courants est effectuée par une modulation d'amplitude, évaluée au plan sinusoïdal, avec une fréquence d'horloge supérieure à 10 kHz ;
- l'onduleur (17) présente un circuit intermédiaire avec un niveau de tension accru par rapport au réseau de bord basse tension ;
- l'onduleur (17) est équipé, dans le circuit intermédiaire, d'un premier accumulateur d'énergie (19) pour la fourniture de tension avec la pente de flancs nécessaire pour le cadencement, et d'un deuxième accumulateur d'énergie (24) ayant une capacité de stockage supérieure pour le stockage de l'énergie pour le mode démarreur ;
- le prélèvement d'énergie à partir du circuit intermédiaire dans le mode démarreur de la machine électrique (4), ainsi que l'alimentation en énergie destinée au circuit intermédiaire dans le mode alternateur intervenant au niveau de tension accru.

2. Démarreur/alternateur selon la revendication 1, dans lequel la machine électrique (4) est une machine asynchrone, une machine synchrone ou une machine à réluctance.

3. Démarreur/alternateur selon la revendication 1 ou 2, une unité active (stator 8), produisant un champ tournant de la machine électrique (4), présentant au moins huit pôles (39).

4. Démarreur/alternateur selon une des revendications précédentes, dans lequel la machine électrique (4) a une fréquence d'inversion de polarité maximale, en particulier entre 300 et 1 600 Hz et plus.

5. Démarreur/alternateur selon une des revendications précédentes, dans lequel le stator (8) de la machine électrique (4) présente de minces tôles statoriques, en particulier avec une épaisseur de 0,35 mm ou moins, et/ou dans lequel les tôles statoriques sont fabriquées à partir d'un matériau avec de faibles pertes par inversion magnétique, en particulier inférieures à 1 watt/kilogramme pour 50 Hz et un tesla.

6. Démarreur/alternateur selon une des revendications précédentes, dans lequel la machine électrique (4) présente des têtes de bobine qui ont une saillie axiale entre 5 mm et 25 mm pour chaque côté du stator (8) de la machine électrique (4).

7. Démarreur/alternateur selon une des revendications précédentes, dans lequel l'entrefer entre le rotor (9) et le stator (8) de la machine électrique (4) est compris entre 0,5 mm et 1,5 mm.

8. Démarreur/alternateur selon une des revendications précédentes, dans lequel l'épaisseur dorsale du stator (8) de la machine électrique est comprise entre 15 mm et 30 mm.

9. Démarreur/alternateur selon une des revendications précédentes, dans lequel la machine électrique (4) présente un refroidissement intérieur par liquide, en particulier un refroidissement par liquide pulvérisé (12), l'amenée du fluide de refroidissement s'effectuant en particulier en fonction de la dissipation de puissance et/ou du régime.

10. Démarreur/alternateur selon une des revendications précédentes, dans lequel la machine électrique (4) fonctionne fortement dans la plage de la saturation magnétique, en particulier pour une densité linéique (pour un couple maxi.) d'au moins 400 à 1 000 A/cm de longueur d'entrefer dans le sens circonférentiel.

11. Démarreur/alternateur selon une des revendications précédentes, dans lequel la machine électrique (4) présente une densité de couple élevée - rapportée au couple maximal - en particulier supérieure à 0,01 Nm/cm³.

12. Démarreur/alternateur selon une des revendications précédentes, dans lequel des commutateurs électroniques (43, 47, 50) de l'onduleur (17) sont refroidis par fluide, en particulier refroidis par bain à ébullition.

13. Démarreur/alternateur selon une des revendications précédentes, dans lequel plusieurs commutateurs électroniques (43) de l'onduleur (17), en particulier 2 à 20 et plus, sont montés en parallèle.

14. Démarreur/alternateur selon une des revendications précédentes, dans lequel l'onduleur (17) comprend, en tant que commutateurs (43, 47, 50), des commutateurs à semi-conducteurs, en particulier des semi-conducteurs rapides, tels que des transistors à effet de champ, des transistors bipolaires et/ou des transistors bipolaires avec grille isolée (IGBT).

15. Démarreur/alternateur selon une des revendications précédentes, dans lequel, à partir du circuit intermédiaire, des machines auxiliaires, telles que des appareils de climatisation (29), des servomoteurs (30), des pompes, sont entraînées électriquement à un niveau de tension élevé.

16. Démarreur/alternateur selon une des revendications précédentes, dans lequel la machine électrique (4) sert également d'alternateur pour des tâches de chauffage.

17. Démarreur/alternateur selon une des revendications précédentes, qui fait partie d'un système d'entraînement avec une commande marche-arrêt automatique du moteur à combustion (1).

18. Démarreur/alternateur selon une des revendications précédentes, dans lequel la machine électrique (4) peut susciter ou assister une accélération et/ou une décélération de l'arbre de commande, en particulier pour accélérer ou décélérer et/ou pour réduire le patinage d'une roue motrice dans le cadre d'une régulation antipatinage par freinage du moteur à combustion et/ou moins d'une roue motrice.

19. Démarreur/alternateur selon une des revendications précédentes, dans lequel la machine électrique (4) sert en outre à réduire des irrégularités de rotation par le fait qu'elle produit un couple en opposition de phase à alternances rapides.
